# EUROPEAN PATENT APPLICATION

(11) **EP 4 770 063 A1**
(43) Date of publication of application: **01.07.2026**
(21) Application number: 24928945.5
(22) Date of filing: 15.03.2024
(51) Int. Cl.: H04M 1/02

(54) **DISPLAY METHOD AND RELATED DEVICE**

(71) Applicant: Honor Device Co., Ltd., Shenzhen, Guangdong 518040 (CN)
(72) Inventor: CHEN, Zhongling, Shenzhen, Guangdong 518040 (CN); YU, Fei, Shenzhen, Guangdong 518040 (CN)
(74) Representative: Isarpatent
(86) International application number: PCT/CN2024/082032
(87) International publication number: WO 2025/189474

(57) **Abstract**

Disclosed in this application are a display method and a related device. The method may be applied to an electronic device including an outer screen, an inner screen, and an external camera, and the external camera includes one or more cameras. The outer screen and the external camera are on a same side of the electronic device. According to the method, the electronic device obtains a first notification in a folded state, and displays the first notification in a first display region of the outer screen when the first notification meets a first preset condition, the first display region being a display region extending from the external camera. This method can improve the utilization of a display region of an outer screen, and avoid the underutilization of a portion of a display region due to the presence of a camera cutout region or a special-shaped border in the outer screen.

## Description

### TECHNICAL FIELD

This application relates to the field of terminal technologies, and in particular, to a display method and a related device.

### BACKGROUND

With the development of terminal technology, terminal devices (also referred to as electronic devices hereinafter) such as mobile phones can have foldable functionality (for example, the foldable functionality is implemented by incorporating a flexible screen), and such terminal devices may also be referred to as foldable screen devices. A foldable screen device typically includes an inner screen and an outer screen. The outer screen is a screen (also referred to as a display hereinafter) that is exposed to the outside when the foldable screen device is in a folded state. The inner screen is a screen that is not exposed to the outside when the foldable screen device is in the folded state but is exposed to the outside when the foldable screen device is in an unfolded state. To maximize the utilization of a display region and achieve the largest possible display region of the outer screen, the outer screen of the foldable screen device may incorporate features such as a camera cutout or a special-shaped border. However, if a camera cutout region or a special-shaped border is avoided when a user interface is displayed through the outer screen of the foldable screen device, a portion of the display region may be underutilized. Moreover, when the camera cutout region is large or the special-shaped border occupies a significant proportion of the entire border of the display, the aesthetic integrity of the outer screen is affected.

### SUMMARY

This application provides a display method and a related device. The display method may be applied to an electronic device including an inner screen, an outer screen, and an external camera. According to the display method, instead of displaying a notification on the outer screen by avoiding a camera cutout region or a special-shaped border, the electronic device displays a specific notification on the outer screen by integrating the camera cutout region or special-shaped border, to be specific, displays the specific notification by coupling a region in which a camera is located to a portion of a region of the outer screen. In this way, the underutilization of a portion of a display region can be avoided, so that a user may use a large area of the outer screen. In addition, the user may couple the region in which the camera is located and the portion of the region of the outer screen for viewing, to reduce the impact of the camera on the aesthetic appeal of the overall display of the outer screen, thereby improving user experience.

According to a first aspect, this application provides a display method. The method may be applied to an electronic device including an outer screen, an inner screen, and an external camera. The external camera included in the electronic device (or referred to as the external camera in the electronic device) and the outer screen included in the electronic device (or referred to as the outer screen in the electronic device) are on a same side of the electronic device. The external camera includes one or more cameras. The method may include: generating a first notification when the electronic device in a folded state, and displaying the first notification in a first display region of the outer screen when the first notification meets a first preset condition. The first display region is a region extending from the external camera.

In the solution provided in this application, instead of displaying a notification on the outer screen by avoiding a region in which the external camera is located (for example, by integrating a camera cutout region or a special-shaped border), the electronic device displays a specific notification (to be specific, a notification meeting the first preset condition) on the outer screen by integrating the region in which the external camera is located. This may be understood as displaying the specific notification by coupling the region in which the external camera is located to a portion of a region of the outer screen, or may be understood as displaying the specific notification in a specific display region (or referred to as a specific region) extending from the external camera in the outer screen. In this way, the underutilization of a portion of a display region can be avoided, so that a user may use a large area of the outer screen. In addition, the user may couple the region in which the camera is located and the portion of the display region of the outer screen for viewing, to reduce the impact of the camera on the aesthetic appeal of the overall display of the outer screen, thereby improving user experience.

In some embodiments of this application, that the external camera and the outer screen of the electronic device are on a same side of the electronic device may be understood as follows: when a user faces the inner screen and uses the electronic device in an unfolded state, the external camera and the outer screen of the electronic device are both located on a side of the electronic device facing away from the user. That the external camera and the outer screen of the electronic device are on a same side of the electronic device may alternatively be understood as follows: when the user faces the outer screen and uses the electronic device in a folded state, the external camera and the outer screen of the electronic device are both located on a side of the electronic device facing the user.

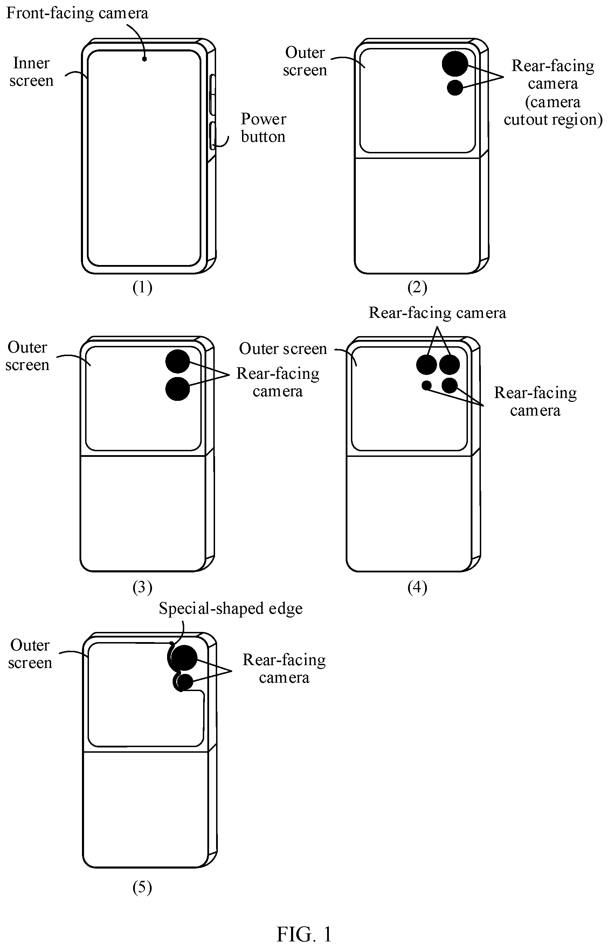

In some embodiments of this application, the external camera is a camera that is exposed to the outside and that is operable when the electronic device is in the folded state. In some embodiments of this application, the one or more cameras included in the external camera may be cameras in a cutout region shown in (2) to (5) of FIG. 1.

In some embodiments of this application, as shown in (2) to (5) of FIG. 1, the one or more cameras included in the external camera may be rear-facing cameras.

In some embodiments of this application, the display method provided in this application may be applied to an electronic device including an outer screen, an inner screen, and at least one external camera. The at least one camera and the outer screen are on a same side of the electronic device. The method may include: generating a first notification when the electronic device in a folded state, and displaying the first notification in a first display region of the outer screen when the first notification meets a first preset condition. The first display region is a region extending from the at least one external camera. In this case, the external camera is a camera whose position meets a specific requirement (to be specific, on the same side of the electronic device as the outer screen), and is not a general name for the one or more cameras in the electronic device whose positions meet a specific requirement (to be specific, on the same side of the electronic device as the outer screen) represented above.

In some embodiments of this application, the first notification may be a notification 1/notification 2/notification 3/notification 4/notification A/notification B described below.

In some embodiments of this application, the first display region may be a notification display region described below.

In some embodiments of this application, the first display region may be a display region 111 described below.

In some embodiments of this application, the first display region may be a display region 131 described below.

With reference to the first aspect, in a possible implementation, the external camera may include a first camera, and the first display region and a region in which the first camera is located may form (or referred to as "constitute") an annular region.

In the solution provided in this application, the electronic device may display the specific notification in an annular display region extending from the external camera in the outer screen. It may be understood that due to a shape characteristic (for example, the annular display region has a radian) of the annular display region, a large portion of a continuous display region of the outer screen can be avoided by displaying the specific notification in the annular display region, thereby reducing the impact on a picture displayed on the entire outer screen.

In some embodiments of this application, the annular region formed by the first display region and the region in which the first camera is located may be a partial annular region. It may be understood that for specific descriptions of the partial annular region, refer to the following, and details are not described herein again in this application.

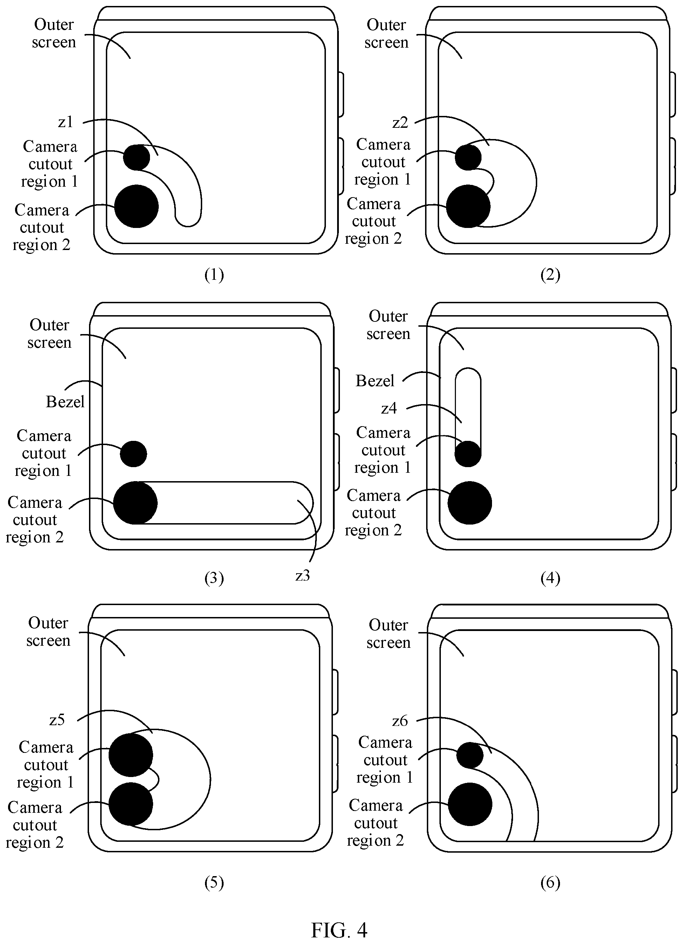

In some embodiments of this application, the annular region formed by the first display region and the region in which the first camera is located may be an annular region extending from a camera cutout region corresponding to the first camera (or referred to as a cutout region in which the first camera is located/cutout region corresponding to the first camera). It may also be understood that the first display region is adjacent to the camera cutout region corresponding to the first camera. In a possible implementation, adjacent borders of the camera cutout region corresponding to the first camera and the first display region are the same as each other. Commonly speaking, the camera cutout region corresponding to the first camera is immediately adjacent to the first display region. For details, refer to FIG. 4. In another possible implementation, the camera cutout region corresponding to the first camera is adjacent to the first display region, but a distance exists between the camera cutout region and the first display region. For ease of understanding, in this application, a portion of the border of the camera cutout region corresponding to the first camera that is adjacent to the first display region is recorded as an adjacent border 1, and a portion of the border of the first display region that is adjacent to the camera cutout region corresponding to the first camera is recorded as an adjacent border 2. It may be understood that when the adjacent borders of the camera cutout region corresponding to the first camera and the first display region are the same, the adjacent border 1 is the adjacent border 2. However, when the camera cutout region corresponding to the first camera is adjacent to the first display region but a distance exists between the camera cutout region and the first display region, the adjacent border 1 is different from the adjacent border 2, but the distance between the adjacent border 1 and the adjacent border 2 is less than a threshold 1 (for example, 1 millimeter). It may be understood that the threshold 1 may be set according to an actual requirement. This is not limited in this application.

In some embodiments of this application, the first camera may be a camera located in a camera cutout region 1 shown in (1) of FIG. 4. In this case, the first display region may be z1.

In some embodiments of this application, the first camera may be a camera located in a camera cutout region 1 shown in (6) of FIG. 4. In this case, the first display region may be z6.

In some embodiments of this application, the annular region formed by the first display region and the region in which the first camera is located may be an annular region extending from the region in which the first camera is located and a special-shaped border portion of a special-shaped border of the outer screen that is adjacent to the region in which the first camera is located. In this case, the first display region may be understood as an annular region extending from a partial special-shaped border of the outer screen that is adjacent to the region in which the first camera is located. It may also be understood that the first display region is adjacent to the region in which the first camera is located. It may be understood that for the specific meaning of "adjacent", refer to the foregoing related descriptions. Details are not described herein again in this application.

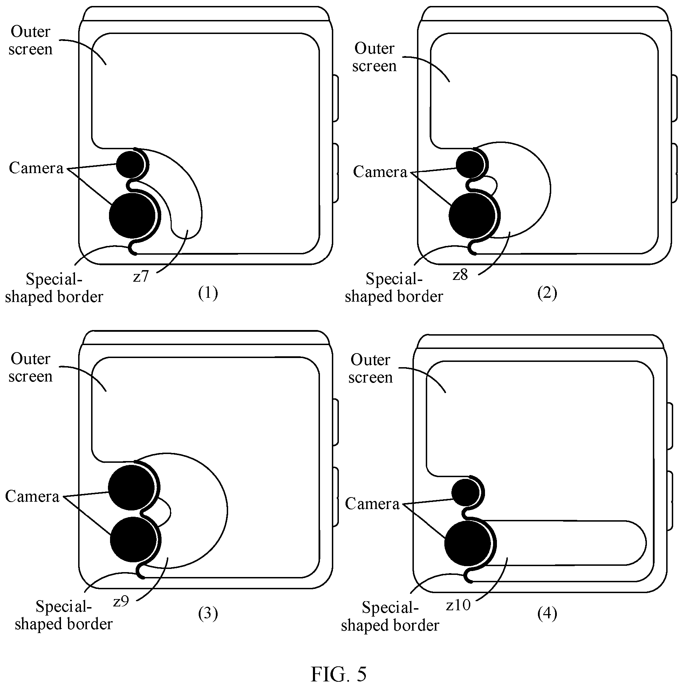

In some embodiments of this application, the first camera may be a camera with a smaller area shown in (1) of FIG. 5. In this case, the first display region may be z7.

In some embodiments of this application, the first display region and the region in which the first camera is located may form an annular region with convex arcs at two ends.

With reference to the first aspect, in a possible implementation, the external camera may further include a second camera, and the annular region formed by the first display region and the region in which the first camera is located surrounds the second camera.

In the solution provided in this application, when the external camera includes a plurality of cameras, instead of displaying the specific notification by integrating only a region in which one camera is located, the electronic device may be configured to display the specific notification by integrating regions in which the plurality of cameras are located, thereby further improving the utilization of the display region of the outer screen.

In some embodiments of this application, the second camera may be a camera located in a camera cutout region 2 shown in (1) of FIG. 4. In this case, the first display region may be z1.

In some embodiments of this application, the second camera may be a camera located in a camera cutout region 2 shown in (6) of FIG. 4. In this case, the first display region may be z6.

In some embodiments of this application, the first camera may be a camera with a larger area shown in (1) of FIG. 5. In this case, the first display region may be z7.

With reference to the first aspect, in a possible implementation, a geometric center of the annular region formed by the first display region and the region in which the first camera is located is the same as a geometric center of the region in which the second camera is located. For details, refer to (1) and (6) of FIG. 4 and (1) of FIG. 5.

In some embodiments of this application, the geometric center of the annular region may be understood as the center of the annular region. Similarly, the geometric center of the region in which the second camera is located may also be understood as the center of the region in which the second camera is located.

With reference to the first aspect, in a possible implementation, an area of the region in which the first camera is located is smaller than an area of the region in which the second camera is located.

In the solution provided in this application, when the external camera includes a plurality of cameras, the electronic device may be configured to integrate areas, shapes, and positions of the plurality of cameras to determine a shape, an area, and a position of a display region for displaying the specific notification, so that the utilization of the display region of the outer screen can be further improved, and the aesthetic appeal can be greatly ensured.

With reference to the first aspect, in a possible implementation, the external camera may include a first camera and a second camera, and the first display region, a region in which the first camera is located, and a region in which the second camera is located form an annular region. The first display region being a region extending from the external camera may specifically include: The first display region is a region extending from the first camera to the second camera.

In the solution provided in this application, when the external camera includes a plurality of cameras, the electronic device may be configured to display the specific notification by integrating the plurality of cameras, so that the utilization of the display region of the outer screen can be further improved, and the aesthetic appeal can be greatly ensured, thereby reducing the impact of the camera on the aesthetic appeal of the overall display of the outer screen.

In some embodiments of this application, the first display region is an annular region extending from the first camera to the second camera.

In some embodiments of this application, the first display region may be a partial annular region concave at two ends. It may also be understood that two ends of the first display region are concave arcs. In a possible implementation, one end of the first display region is a partial arc border of the camera cutout region corresponding to the first camera, and the other end of the first display region is a partial arc border of a camera cutout region corresponding to the second camera. In another possible implementation, one end of the first display region is a partial special-shaped border of the outer screen adjacent to the region in which the first camera is located, and the other end of the first display region is a partial special-shaped border of the outer screen adjacent to the region in which the second camera is located. It may be understood that for the specific meaning of "adjacent", refer to the foregoing related descriptions. Details are not described herein again in this application.

In some embodiments of this application, the first camera and the second camera may be cameras that are located in a camera cutout region 1 and a camera cutout region 2 shown in (2) of FIG. 4, respectively. In this case, the first display region may be z2.

In some embodiments of this application, the first camera and the second camera may be cameras that are located in a camera cutout region 1 and a camera cutout region 2 shown in (5) of FIG. 4, respectively. In this case, the first display region may be z5.

In some embodiments of this application, the first camera and the second camera may be cameras that are located in a camera cutout region 1 and a camera cutout region 2 shown in (2) of FIG. 5, respectively. In this case, the first display region may be z8. It may be understood that the first camera may be a camera with a smaller area located in the camera cutout region 1, or may be a camera with a smaller area located in the camera cutout region 2.

In some embodiments of this application, the first camera and the second camera may be cameras that are located in a camera cutout region 1 and a camera cutout region 2 shown in (5) of FIG. 4, respectively. In this case, the first camera and the second camera have the same size, and the first display region may be z9.

It may be understood that the first display region may alternatively be a region of another shape extending from the first camera to the second camera. This is not limited in this application.

With reference to the first aspect, in a possible implementation, the external camera may include a first camera, and the first display region and a region in which the first camera is located may form a band-shaped region (or referred to as a strip-shaped/strip-like region).

In the solution provided in this application, the electronic device may display the specific notification in a band-shaped display region (or referred to as a strip-shaped/strip-like display region) extending from the external camera in the outer screen. It may be understood that due to a shape characteristic of the band-shaped display region (for example, having two parallel sides), specific content of the specific notification displayed in the band-shaped display region can flow seamlessly and align with viewing habits of a user (for example, content displayed in the band-shaped region may follow a distribution trend from left to right/right to left/top to bottom/bottom to top along two long sides).

In some embodiments of this application, the external camera may include a first camera. The camera cutout region corresponding to the first camera and the first display region form a rounded rectangular region. A height of the rounded rectangular region is the same as a height of the camera cutout region corresponding to the first camera. A rounded corner radius of the rounded rectangular region is the same as a radius of the camera cutout region corresponding to the first camera. Two parallel sides of the rounded rectangular region are parallel to two parallel sides of the outer screen.

It may be understood that for specific descriptions of the band-shaped region, refer to the following, and details are not described herein in this application.

With reference to the first aspect, in a possible implementation, the external camera may further include a second camera, and an area of the region in which the second camera is located is smaller than an area of the region in which the first camera is located. The first display region being a region extending from the external camera may specifically include: The first display region is a band-shaped region extending from the first camera.

In the solution provided in this application, when the external camera includes a plurality of cameras, the electronic device may display the specific notification in a band-shaped display region extending from a region in which a camera with a larger area is located, so that an area for displaying the specific notification is larger. In this way, the electronic device may display more specific content of the specific notification.

In some embodiments of this application, the first camera may be a camera located in a camera cutout region 2 shown in (3) of FIG. 4. In this case, the first display region may be z3.

In some embodiments of this application, the first camera may be a camera with a larger area shown in (4) of FIG. 5. In this case, the first display region may be z10.

With reference to the first aspect, in a possible implementation, the first display region being a region extending from the external camera may specifically include: The first display region is a region extending from a cutout region corresponding to the external camera (or referred to as a camera cutout region corresponding to the external camera).

In the solution provided in this application, instead of displaying a notification on the outer screen by avoiding a camera cutout region, the electronic device displays a specific notification (to be specific, a notification meeting the first preset condition) on the outer screen by integrating the camera cutout region. In this way, the underutilization of a portion of a display region can be avoided, so that a user may use a large area of the outer screen. In addition, the user may couple the region in which the camera is located and the portion of the display region of the outer screen for viewing, to reduce the impact of the camera on the aesthetic appeal of the overall display of the outer screen, thereby improving user experience.

In some embodiments of this application, the cutout region corresponding to the external camera may be a circular cutout region. It may be understood that the cutout region corresponding to the external camera may alternatively be a cutout region of another shape. This is not limited in this application.

With reference to the first aspect, in a possible implementation, the first display region being a region extending from the external camera may specifically include: The first display region is a region extending from a region in which the inner screen is coupled to the external camera. A border of the region in which the inner screen is coupled to the external camera is concave. It may also be understood that the border of the region in which the inner screen is coupled to the external camera is a concave arc.

In the solution provided in this application, instead of displaying a notification on the outer screen by avoiding a special-shaped border, the electronic device displays a specific notification (to be specific, a notification meeting the first preset condition) on the outer screen by integrating the special-shaped border. In this way, the underutilization of a portion of a display region can be avoided, so that a user may use a large area of the outer screen. In addition, the user may couple the region in which the camera is located and the portion of the display region of the outer screen for viewing, to reduce the impact of the camera on the aesthetic appeal of the overall display of the outer screen, thereby improving user experience.

It may be understood that the region in which the inner screen is coupled to the external camera may be a region including a partial special-shaped border of the outer screen adjacent to the external camera.

With reference to the first aspect, in a possible implementation, the method may further include: generating a second notification when the electronic device is in the folded state; and displaying the second notification in a notification bar on the outer screen if the second notification meets a second preset condition. That the second notification meets a second preset condition may include: The second notification is any one of a calendar notification, a schedule notification, an application store notification, a game notification, and an SMS message notification.

In the solution provided in this application, a specific notification is displayed in a specific region of the outer screen by integrating the region in which the camera is located or a special-shaped border, and another notification (for example, a general notification) is displayed in a region such as a notification bar or a status bar on the outer screen. In this method, a specific notification may be displayed more prominently to a user by integrating the region in which the camera is located or the special-shaped border, making the specific notification more noticeable to the user, so that the user views and processes the specific notification promptly.

In some embodiments of this application, that the second notification meets a second preset condition may include: The second notification is neither an important notification nor a banner notification.

In some embodiments of this application, that the second notification meets a second preset condition may include: The second notification is a general notification. In some embodiments of this application, a priority of the general notification is lower than a priority of the important notification.

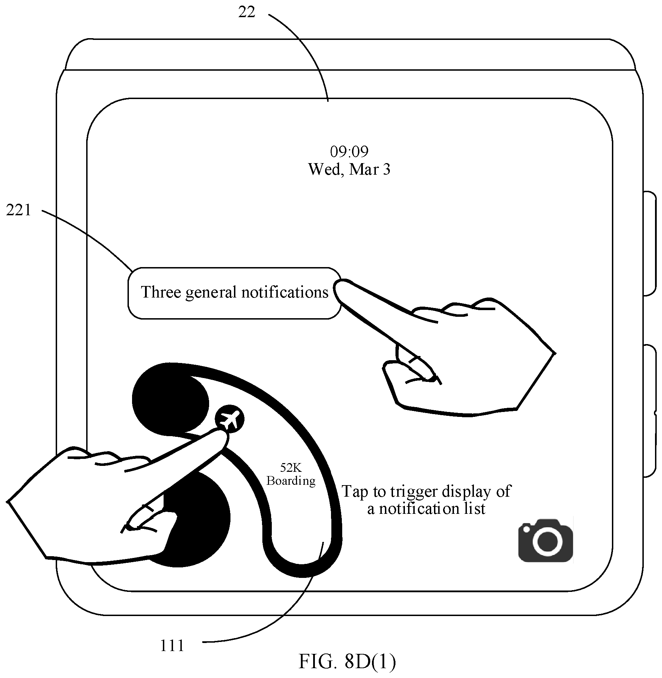

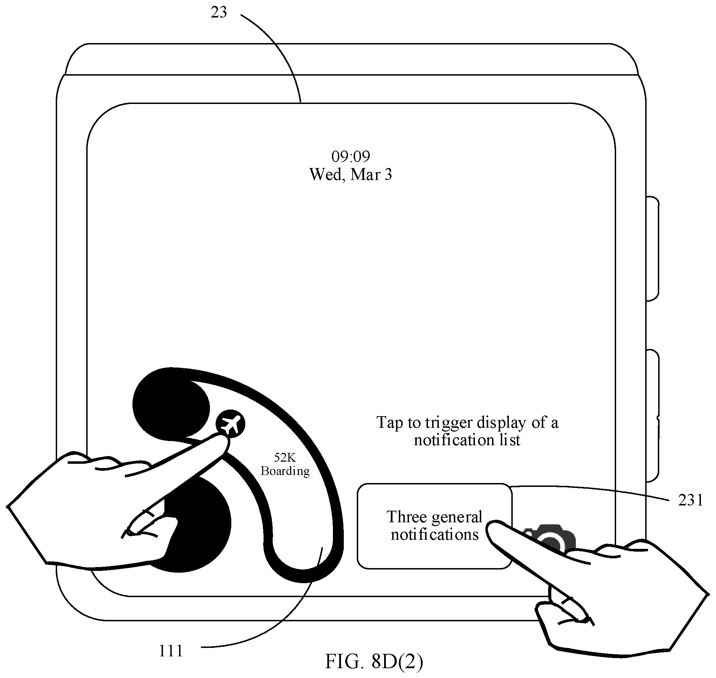

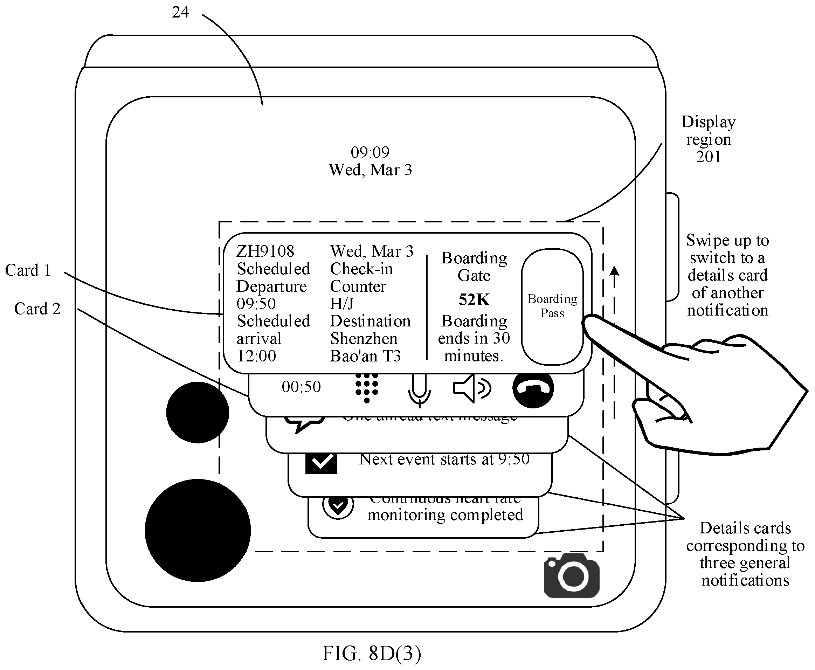

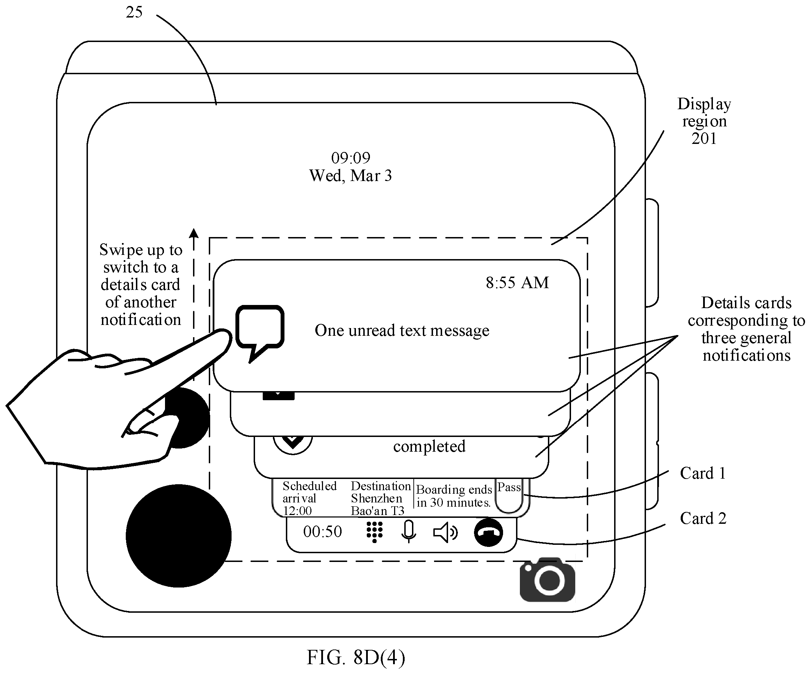

In some embodiments of this application, when a quantity of general notifications generated by the electronic device is greater than a threshold 2 (for example, 2), the electronic device may display the quantity of general notifications in another display region different from the first display region. For details, refer to FIG. 8D(1) and FIG. 8D(2). It may be understood that the threshold 2 may be set according to an actual requirement. This is not limited in this application.

It may be understood that the calendar notification, the schedule notification, the application store notification, the game notification, and the SMS message notification described above may be general notifications. Certainly, the general notification may further include other notifications. This is not specifically limited in this application.

With reference to the first aspect, in a possible implementation, that the first notification meets a first preset condition may specifically include: The first notification may be any one of a call status notification, a travel status notification, an exercise status notification, a recording status notification, a check-in status notification, and a code scanning status notification.

In the solution provided in this application, for a smart reminder that is generated based on use habits and a scenario (especially including an important status change) of a user, the electronic device may display the smart reminder in the specific region by integrating the region in which the external camera is located, so that the user can view and process the smart reminder promptly.

In some embodiments of this application, the call status notification may include related information in a call process, and may specifically include a call status (for example, calling, in call, or call ended), call duration, and phone numbers of a phone call, and a call status, call duration, call participants, and the like of a voice/video call performed in communication software.

In some embodiments of this application, the travel status notification may specifically include a travel status, for example, related information of flights/trains and high-speed rails/subways/ride-hailing services. The related information of flights may be specifically flight status information described below, the related information of trains/high-speed rails may be specifically train/high-speed rail status information described below, and the related information of ride-hailing services may be specifically ride-hailing service status information described below.

In some embodiments of this application, the exercise status notification may specifically include exercise status information (for example, an exercise type, exercise duration, and an exercise status).

In some embodiments of this application, the recording status notification may specifically include related information (for example, recording duration) in a recording process.

In some embodiments of this application, the check-in status notification may specifically include geofence-based check-in.

In some embodiments of this application, the code scanning status notification may specifically include a geofence-based ride code.

In some embodiments of this application, that the first notification meets a first preset condition may specifically further include: The first notification is a package status notification. The package status notification may specifically include a package status (for example, an estimated time of arrival of a package, a pickup code of the package, and a current location of the package).

With reference to the first aspect, in a possible implementation, that the first notification meets a first preset condition may specifically include: The first notification is a banner notification.

It may be understood that for specific descriptions of the banner notification, refer to the following, and details are not described herein in this application.

With reference to the first aspect, in a possible implementation, that the electronic device displays the first notification in the first display region of the outer screen may specifically include: The electronic device may display the first notification in the first display region of the outer screen when the electronic device is in an unlocked state.

In the solution provided in this application, in the unlocked state, the electronic device may display the specific notification (for example, a banner notification or an important notification) in a specific region of the outer screen by integrating the region in which the external camera is located. In this manner, when viewing an interface (for example, a desktop or an application interface) displayed on the outer screen, the user may further see the specific notification promptly, thereby processing the specific notification promptly.

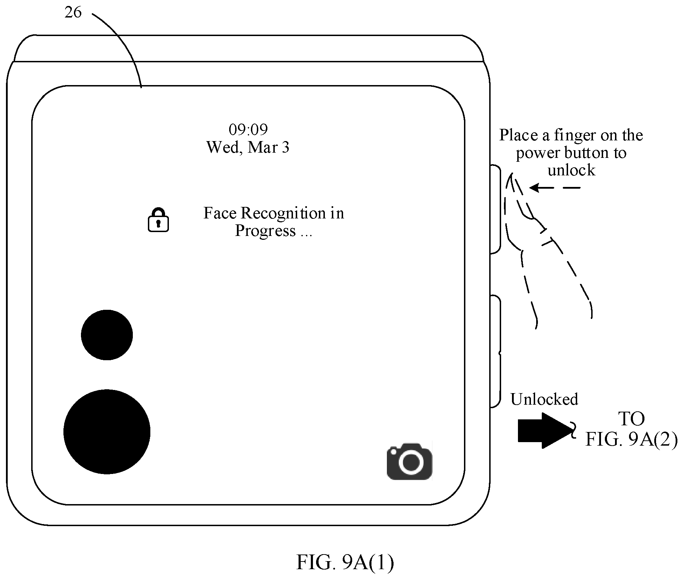

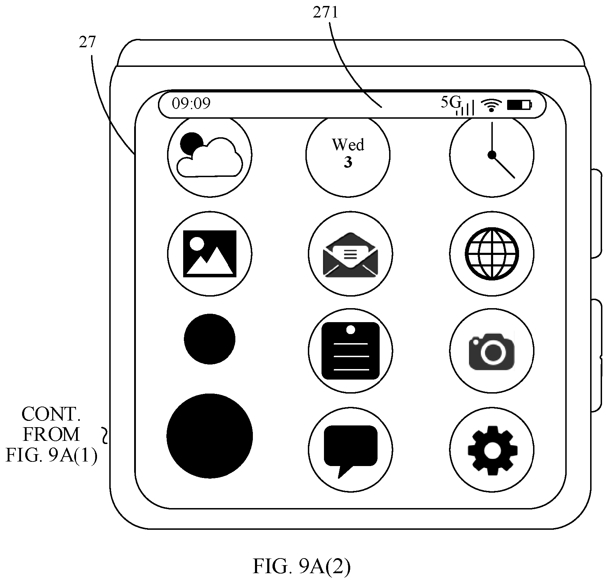

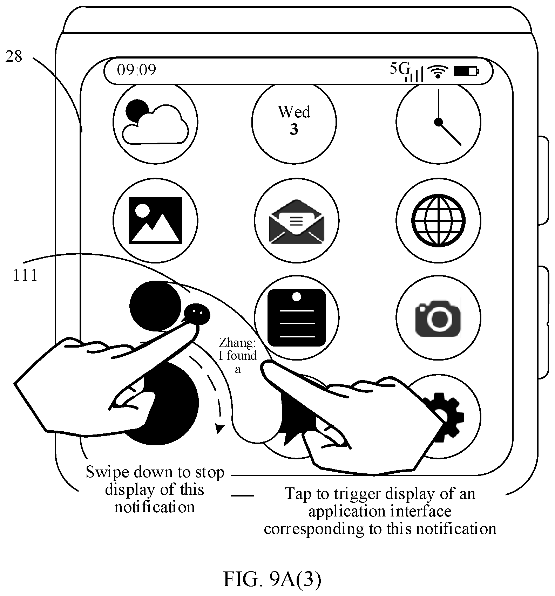

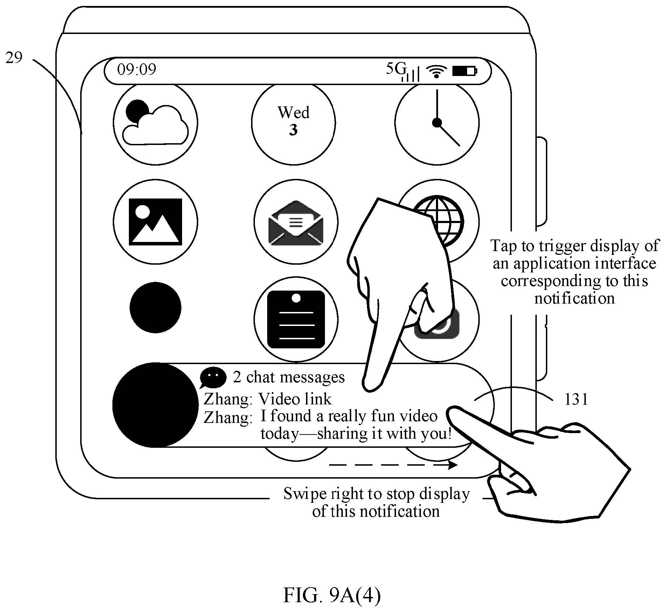

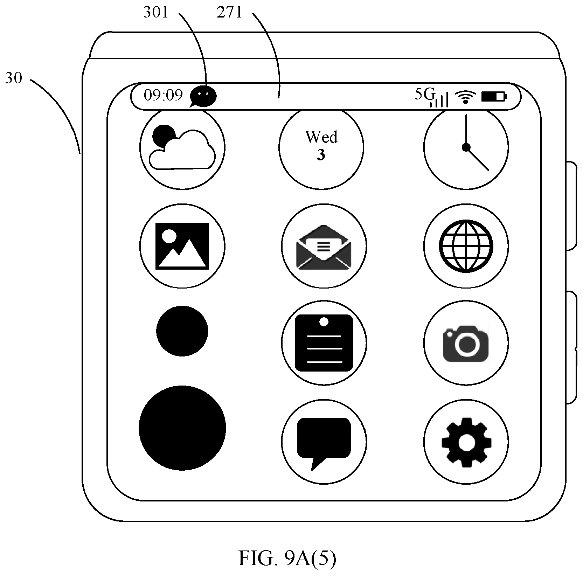

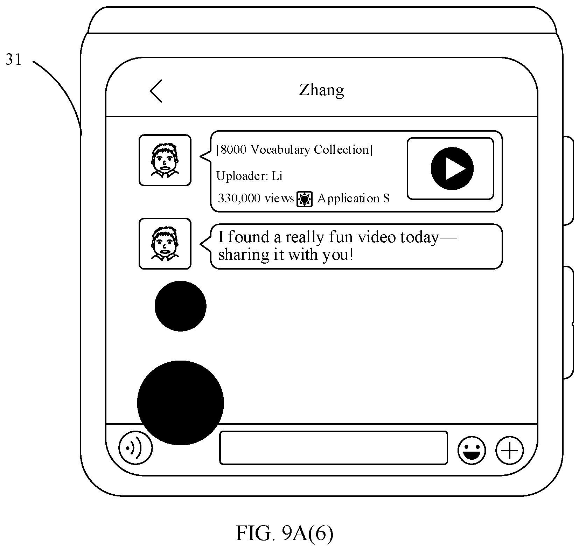

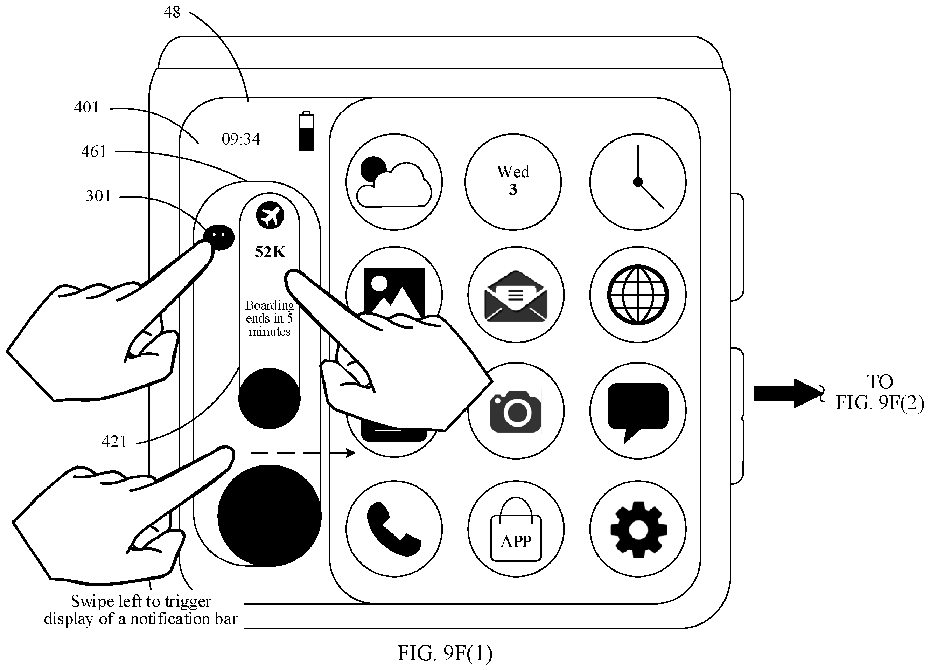

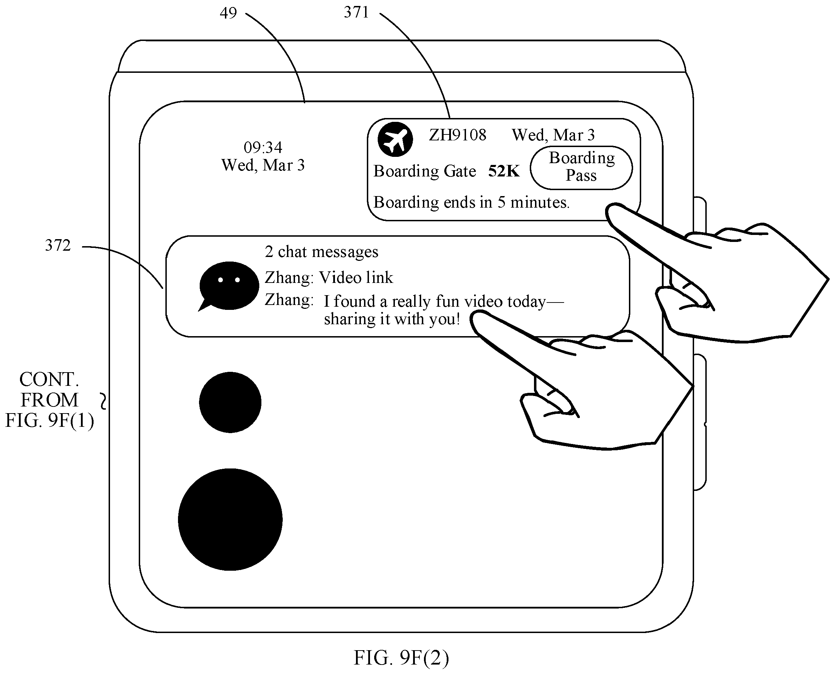

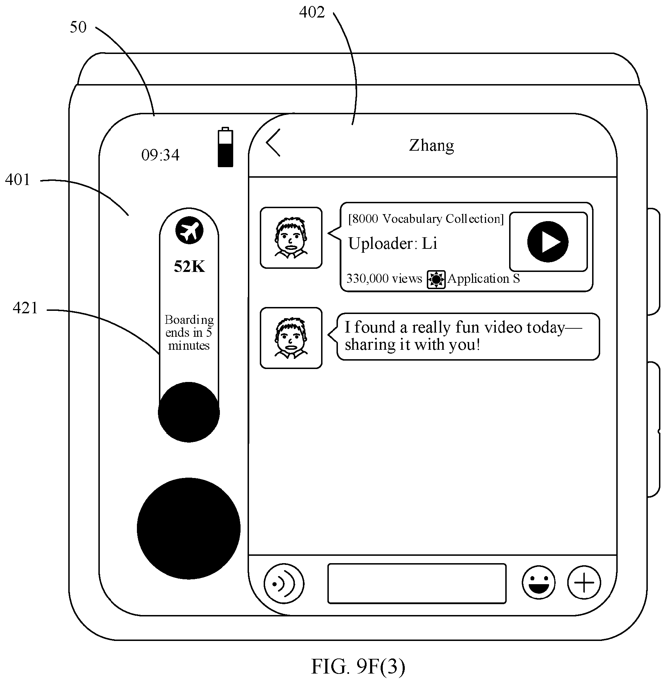

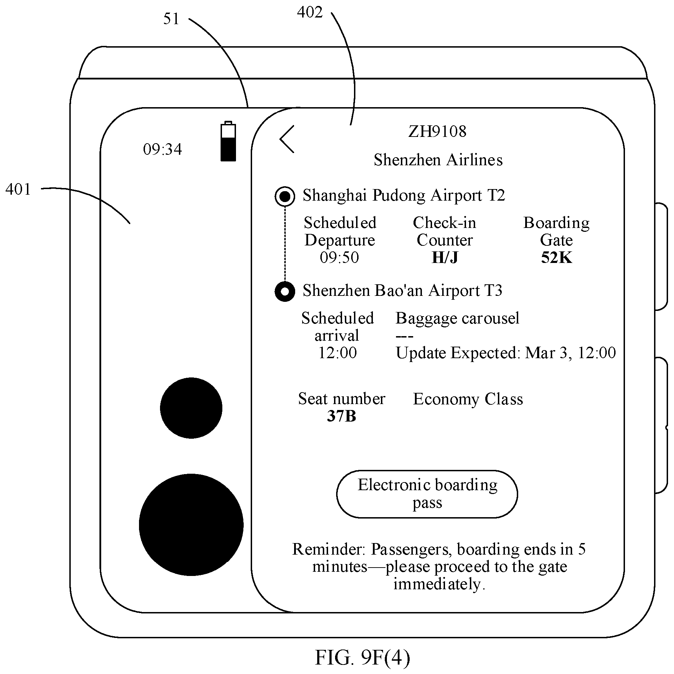

It may be understood that in the unlocked state, refer to related descriptions of FIG. 9A(1) to FIG. 9F(4) for a specific manner in which the electronic device displays the specific notification in the specific region of the outer screen by integrating the region in which the external camera is located. Details are not described herein in this application.

With reference to the first aspect, in a possible implementation, the first notification is generated by a first application. After the electronic device displays the first notification in the first display region of the outer screen, the method may further include: The electronic device may detect a first operation performed by a user on the first display region. The electronic device may display a first interface of the first application on the outer screen in response to the first operation.

In the solution provided in this application, in the unlocked state, for the specific notification, the electronic device may display the specific notification in a specific region of the outer screen by integrating the region in which the camera is located or the special-shaped border, and may also display a user interface corresponding to the specific notification when receiving a corresponding operation of the user, thereby displaying more information to the user. In addition, the user may trigger, through an operation (for example, a tap) performed in the specific region, the electronic device to display an application interface corresponding to the specific notification, and the user does not need to start an application through an operation performed on an application icon and also does not need to find and open a corresponding interface through another operation. In this way, it is convenient for the user to quickly view specific information of the specific notification.

In some embodiments of this application, as shown in FIG. 9A(3) and FIG. 9A(4), that the electronic device may detect the first operation performed by the user on the first display region may specifically include: The electronic device may detect an operation (for example, a tap) performed by the user on a display region 111 included in a user interface 28, or an operation (for example, a tap) performed by the user on a display region 131 included in a user interface 29. In this case, the first application may be a communication application, and the first interface may be a user interface 31 that can be displayed by the electronic device, as shown in FIG. 9A(6).

With reference to the first aspect, in a possible implementation, duration of displaying the first notification in the first display region by the electronic device is not greater than first duration. After the electronic device displays the first notification in the first display region of the outer screen, the method may further include: The electronic device may display the first notification in a status bar on the outer screen when the duration of displaying the first notification in the first display region is greater than the first duration.

In the solution provided in this application, in the unlocked state, the electronic device may display the specific notification in the specific region of the outer screen by integrating the region in which the camera is located or the special-shaped border. In addition, when duration of displaying the specific notification in the specific region reaches specific duration, the electronic device may display the specific notification in the status bar, to avoid blocking other content (for example, an application interface or an important icon) displayed on the outer screen.

In some embodiments of this application, the first duration may be t2 described below.

In some embodiments of this application, the first duration may alternatively be t1 described below.

With reference to the first aspect, in a possible implementation, that the electronic device displays the first notification in the first display region of the outer screen may specifically include: The electronic device may display the first notification in the first display region of the outer screen when the electronic device is in a screen-locked state.

In the solution provided in this application, in the screen-locked state, the electronic device may display the specific notification (for example, an important notification) in a specific region of the outer screen by integrating the region in which the external camera is located. This manner enables a user to quickly view a specific notification when the electronic device is in the screen-locked state, thereby processing the specific notification promptly.

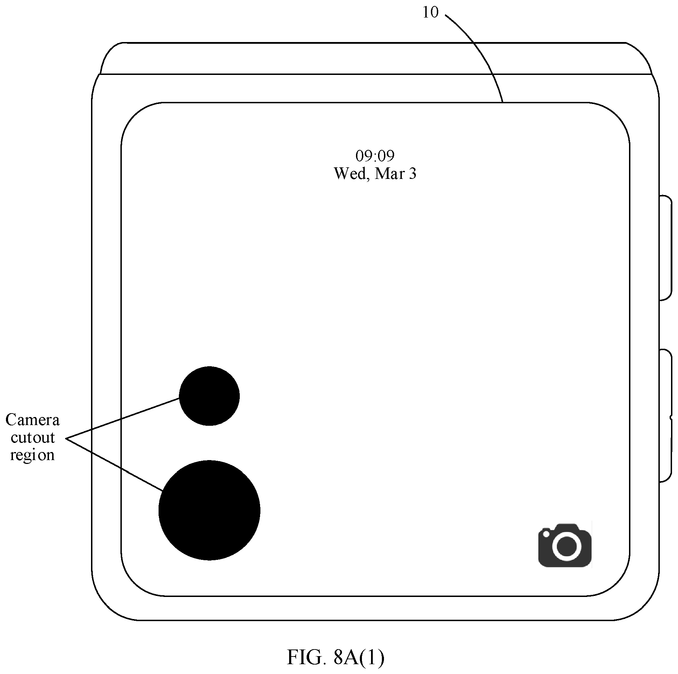

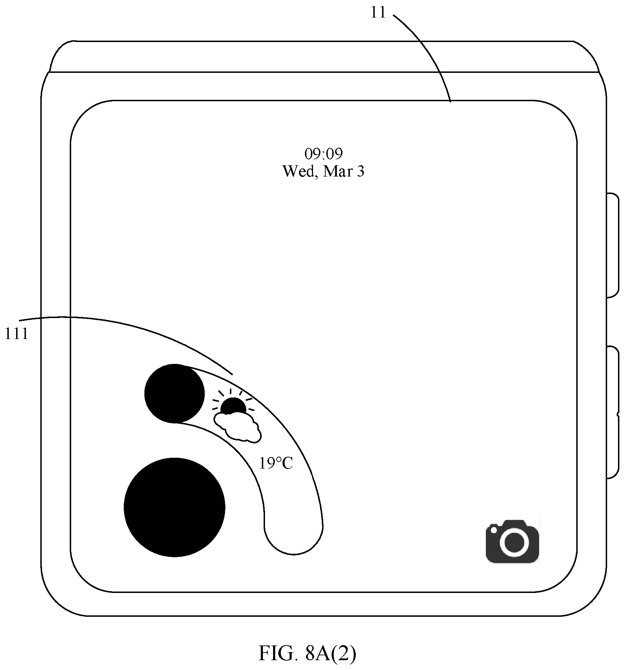

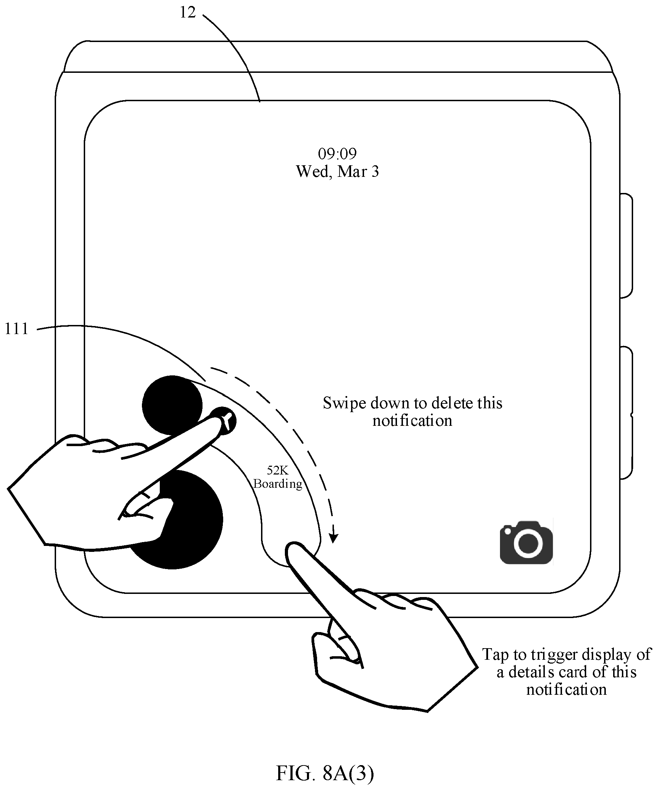

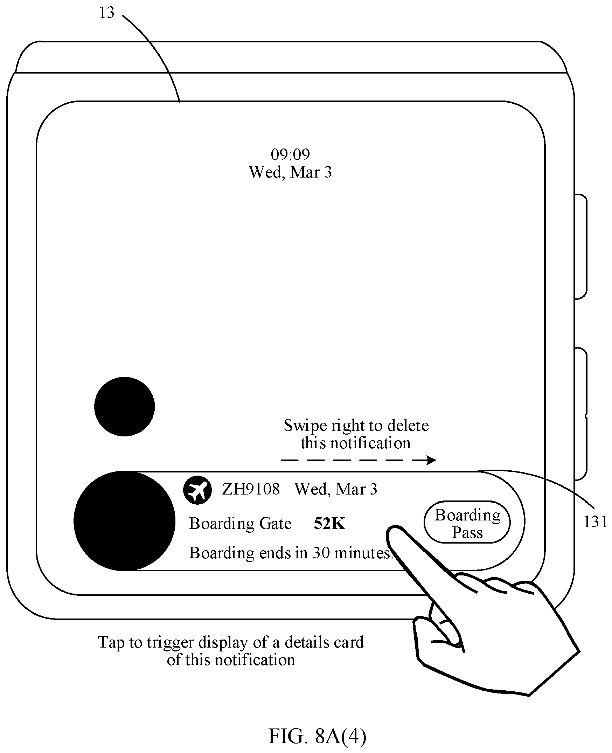

It may be understood that in the screen-locked state, refer to related descriptions of FIG. 8A(1) to FIG. 8D(4) for a specific manner in which the electronic device displays the specific notification in the specific region of the outer screen by integrating the region in which the external camera is located. Details are not described herein in this application.

With reference to the first aspect, in a possible implementation, after the generating a first notification when the electronic device is in a folded state, the method may further include: The electronic device may generate a third notification when the electronic device is in the folded state and in the screen-locked state. The electronic device may display the third notification in the first display region of the outer screen when the third notification meets the first preset condition. The electronic device may detect a second operation performed by a user on the first display region. The electronic device may display the first notification in the first display region of the outer screen in response to the second operation, to be specific, switch the display from the third notification to the first notification in the first display region of the outer screen.

In the solution provided in this application, the electronic device may display a plurality of specific notifications in the specific region of the outer screen by integrating the region in which the camera is located or the special-shaped border, and switch the display of different specific notifications when a corresponding operation of the user is received, so that the user may view different notifications promptly as required.

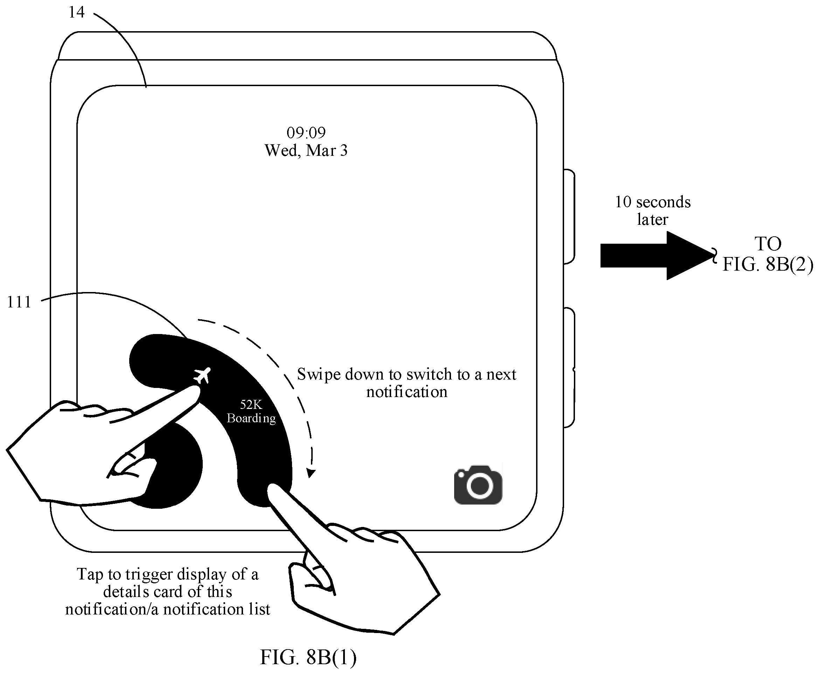

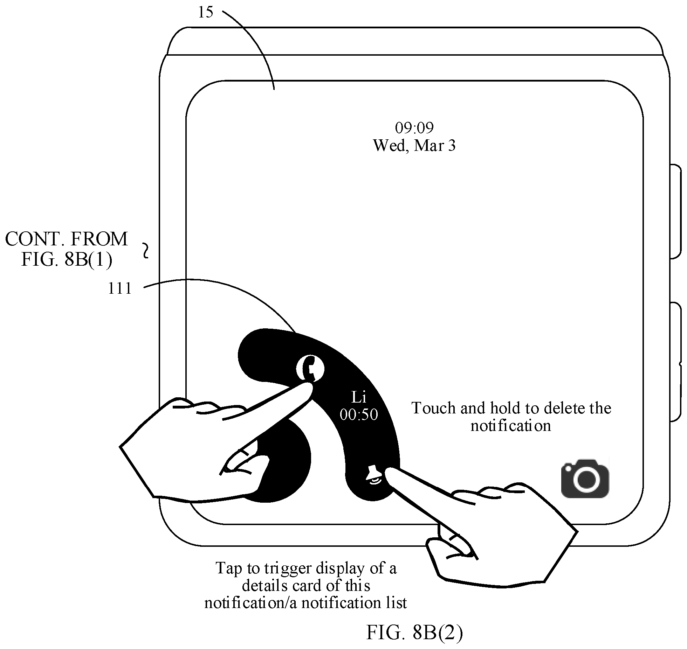

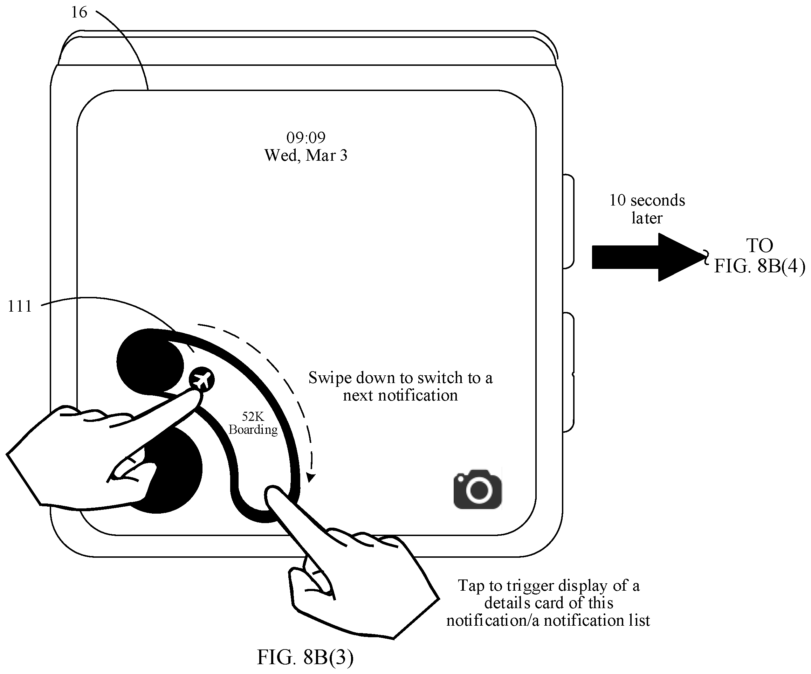

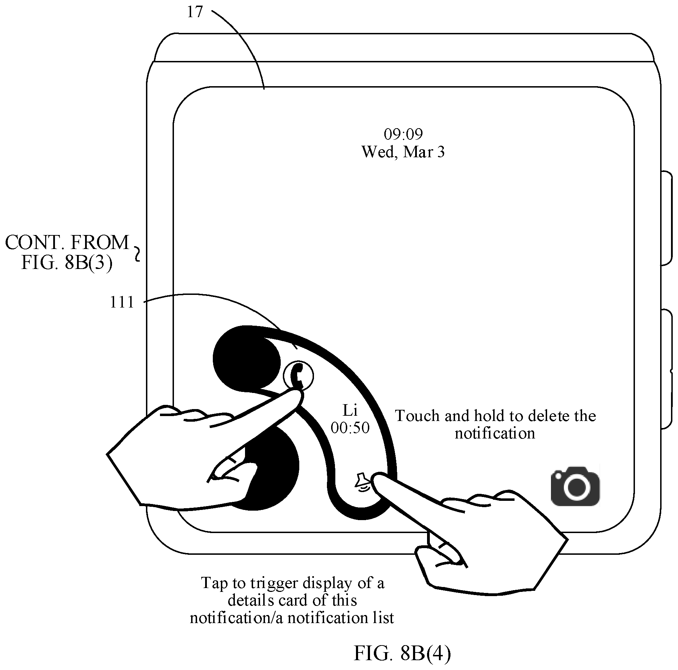

In some embodiments of this application, when a plurality of specific notifications (at least two specific notifications) are to be displayed in the specific region of the outer screen, the electronic device may automatically switch the specific notification displayed in the specific region. For details, refer to FIG. 8B(3) and FIG. 8B(4).

In some embodiments of this application, the third notification may be a notification 1 displayed in a display region 111 shown in FIG. 8B(1) or FIG. 8B(3).

In some embodiments of this application, the third notification may be a notification 2 displayed in a display region 111 shown in FIG. 8B(2) or FIG. 8B(4).

According to a second aspect, this application provides an electronic device. The electronic device includes an outer screen, an inner screen, an external camera, one or more memories, and one or more processors. The outer screen is coupled to the external camera, the one or more memories, and the one or more processors. The inner screen is coupled to the external camera, the one or more memories, and the one or more processors. The memory is configured to store computer program code, the computer program code includes computer instructions. The one or more processors invoke the computer instructions to enable the electronic device to perform the method described in the first aspect or any implementation of the first aspect.

According to a third aspect, this application provides a computer storage medium. The computer storage medium includes computer instructions. When the computer instructions are run on an electronic device, the electronic device is enabled to perform the method described in the first aspect or any implementation of the first aspect.

According to a fourth aspect, embodiments of this application provide a chip. The chip may be used in an electronic device. The chip includes one or more processors. The processor is configured to invoke computer instructions to enable the electronic device to perform the method described in the first aspect or any implementation of the first aspect.

In some embodiments of this application, the chip system may be an application processor (Application Processor, AP), or a system on chip (System on Chip, SoC) including an AP. The method described in the first aspect or any implementation of the first aspect may be implemented by an AP. The method described in the second aspect or any implementation of the second aspect may be implemented by an AP.

In some other embodiments of this application, the chip system may include an AP and another module. The another module may be a modem (Modem, which may also be referred to as a baseband processor).

According to a fifth aspect, embodiments of this application provide a computer program product including instructions. When the computer program product is run on an electronic device, the electronic device is enabled to perform the method described in the first aspect or any implementation of the first aspect.

It may be understood that the electronic device provided in the second aspect, the computer storage medium provided in the third aspect, the chip provided in the fourth aspect, and the computer program product provided in the fifth aspect are all configured to perform the method described in the first aspect or any implementation of the first aspect. Therefore, for beneficial effects that can be achieved, refer to beneficial effects of any possible implementation in the first aspect, and details are not described herein again.

### BRIEF DESCRIPTION OF DRAWINGS

FIG. 1 is a diagram of a structure of an electronic device according to an embodiment of this application;
FIG. 2 is a diagram of an electronic device in different physical states according to an embodiment of this application;
FIG. 3 is a diagram of a hardware structure of an electronic device according to an embodiment of this application;
FIG. 4 is a diagram of a group of notification display regions according to an embodiment of this application;
FIG. 5 is a diagram of another group of notification display regions according to an embodiment of this application;
FIG. 6 is a diagram of position changes of a group of notification display regions before and after rotation according to an embodiment of this application;
FIG. 7 is a diagram of position changes of another group of notification display regions before and after rotation according to an embodiment of this application;
FIG. 8A(1) to FIG. 8D(4) are diagrams of a group of user interfaces according to an embodiment of this application;
FIG. 9A(1) to FIG. 9F(4) are diagrams of a group of user interfaces according to an embodiment of this application;
FIG. 10 is a flowchart of a display method according to an embodiment of this application;
FIG. 11 is a diagram of a software structure of an electronic device according to an embodiment of this application;
FIG. 12 is a flowchart of another display method according to an embodiment of this application; and
FIG. 13 is a diagram of software and hardware interaction according to an embodiment of this application.

### DESCRIPTION OF EMBODIMENTS

The following clearly and completely describes technical solutions in embodiments of this application with reference to the accompanying drawings in embodiments of this application. In the descriptions of embodiments of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of embodiments of this application, "plurality" indicates two or more.

It should be understood that, the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, processes, methods, systems, products, or devices including a series of steps or units is not limited to the listed steps or units, but instead, optionally include other steps or units not listed, or optionally include other steps or units inherent to the processes, methods, products, or devices.

It should be understood that the term "user interface" in the specification, claims, and accompanying drawings of this application is a medium interface for performing interaction and information exchange between an application or an operating system and a user. The user interface is usually represented in a form of a graphical user interface (Graphical User Interface, GUI), and is a user interface that is related to a computer operation and that is displayed in a graphic manner. The user interface may be an interface element displayed on a display of an electronic device, for example, an icon, a window, or a control. The control may include a visual interface element, for example, an icon, a button, a menu, a tab, a text box, a dialog box, a status bar, a navigation bar, or a widget (Widget).

An "embodiment" in this application means that specific features, structures, or characteristics described by integrating this embodiment may be included in at least one embodiment of this application. The phrase shown at various positions in the specification may not necessarily refer to a same embodiment, nor an independent or optional embodiment exclusive from another embodiment. A person skilled in the art explicitly or implicitly understands that embodiments described in this application may be combined with other embodiments.

In a display process on an outer screen of a foldable screen device, a portion of a display region may be underutilized to avoid a camera cutout region or a special-shaped border in the outer screen. However, if the camera cutout region or special-shaped border in the outer screen is not taken into consideration at all, displayed content may be greatly affected when the camera cutout region is large or the special-shaped border occupies a significant proportion of the entire border of the display.

Based on the foregoing content, embodiments of this application provide a display method and a related device. The display method may be applied to an electronic device (to be specific, the foregoing foldable screen device) including an inner screen, an outer screen, and an external camera. According to the display method, the electronic device may display a corresponding notification by integrating a camera cutout region or a special-shaped border in the outer screen.

It may be understood that the electronic device in embodiments of this application may be specifically a mobile phone, a tablet computer, a wearable device, an augmented reality (Augmented Reality, AR) device/a virtual reality (Virtual Reality, VR) device, a notebook computer, an ultra-mobile personal computer (Ultra-Mobile Personal Computer, UMPC), a netbook, a personal digital assistant (Personal Digital Assistant, PDA), an artificial intelligence (Artificial Intelligence, AI) device, a dedicated camera (for example, a single-lens reflex camera, or a compact camera), or the like. A specific type of the electronic device is not limited in embodiments of this application.

**Some concepts related to a foldable screen device (collectively referred to as an electronic device below) in embodiments of this application are first described below.**

### 1. Inner screen and outer screen

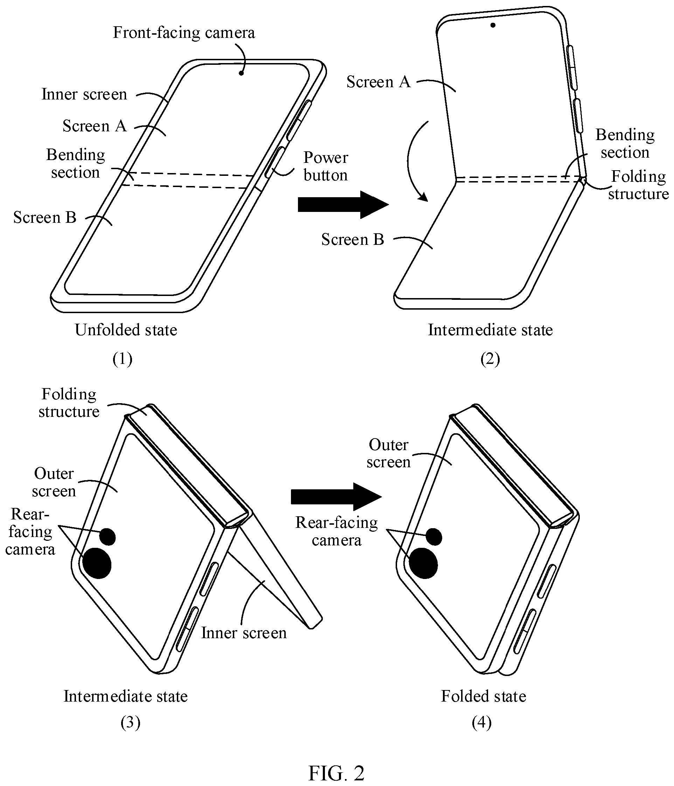

The inner screen of the electronic device is a display that is not exposed to the outside when the electronic device is in a folded state and that is fully unfolded and exposed to the outside when the electronic device is in an unfolded state (as shown in FIG. 1 and FIG. 2). The outer screen of the electronic device is a display that is exposed to the outside when the electronic device is in a folded state (as shown in FIG. 1 and FIG. 2). It may be understood that when a user uses the electronic device in the unfolded state, the inner screen of the electronic device faces the user, and the outer screen of the electronic device faces away from the user. However, when the user uses the electronic device in the folded state, the outer screen of the electronic device faces the user, and the inner screen of the electronic device is fully superimposed (for example, a screen A and a screen B included in the inner screen are superimposed, and a plane on which the screen A is located is parallel to a plane on which the screen B is located).

In some embodiments of this application, as shown in (1) of FIG. 1, a front-facing camera and the inner screen of the electronic device are located on one same side (or referred to as one same face) of the electronic device, and this side may be understood as a side that faces the user when the user uses the electronic device in the unfolded state. As shown in (2) of FIG. 1, a rear-facing camera and the outer screen of the electronic device are both located on the other side (or referred to as the other surface) of the electronic device, and this side may be understood as a side that faces away from the user when the user uses the electronic device in the unfolded state.

It may be understood that for ease of description, in this application, the front-facing camera and the rear-facing camera are described based on orientations of the cameras of the electronic device when the user uses the inner screen and the outer screen of the electronic device. Specifically, in this application, when the inner screen included in the electronic device in the unfolded state faces the user, the camera of the electronic device that faces the user is recorded as the front-facing camera. This may also be understood as that the inner screen and the front-facing camera of the electronic device are located on a same face of the electronic device. Similarly, in this application, when the outer screen included in the electronic device in the folded state faces the user, the camera of the electronic device that faces the user is recorded as the rear-facing camera. This may also be understood as that the outer screen and the rear-facing camera of the electronic device are located on a same face of the electronic device. It may be understood that when the inner screen included in the electronic device in the unfolded state faces away from the user, the camera of the electronic device that faces the user is the rear-facing camera. It should be noted that, in some other embodiments of this application, this application may alternatively describe the camera that faces the user when the user uses the display (regardless of whether the display is the inner screen or the outer screen) of the electronic device as the front-facing camera and describe the camera that faces away from the user when the user uses the display (regardless of whether the display is the inner screen or the outer screen) of the electronic device as the rear-facing camera.

In some embodiments of this application, the front-facing camera and the rear-facing camera of the electronic device may be non-hidden cameras disposed under the inner screen and the outer screen, respectively. For example, the front-facing camera and the rear-facing camera of the electronic device may be respectively cameras in a cutout region shown in (1) and (2) of FIG. 1. In some other embodiments of this application, the front-facing camera may alternatively be a pop-up camera, a flip camera, or the like.

In some embodiments of this application, the inner screen of the electronic device may be a foldable flexible display, and the outer screen of the electronic device may be an unfoldable display.

In some embodiments of this application, the outer screen of the electronic device may include a camera cutout region, for example, a region in which the rear-facing camera is located, as shown in (2) of FIG. 1, It may be understood that the camera cutout region is a region that is provided with no screen circuit and that is disposed in the display to expose a camera and facilitate image capture by the camera.

It may be understood that this application does not limit the size, shape, and position of the camera cutout region in the outer screen. The size and shape of the camera cutout region included in the outer screen are related to the sizes, quantity, and shapes of cameras (which may be a rear-facing camera) disposed under the outer screen. For example, as shown in (2), (3), and (4) of FIG. 1, one or more cameras may be disposed under the outer screen of the electronic device. In addition, when a plurality of cameras are disposed, the sizes and shapes of the plurality of cameras may be the same or may be different.

In some other embodiments of this application, the outer screen of the electronic device may include a special-shaped border. The special-shaped border may be located near a camera (which may be the rear-facing camera) located on a same face as the outer screen. For example, a border of the outer screen that is located near the rear-facing camera shown in (5) of FIG. 1 is an irregular border, in other words, a special-shaped border (highlighted in bold in FIG. 1).

It may be understood that a specific shape of the special-shaped border of the outer screen may be designed in a manner of adapting to the border of the camera (including designing the two to correspond with or aesthetically match each other in position and shape). This is not limited in this application. For example, the special-shaped border of the outer screen may be an arc whose center is the same as the center of the rear-facing camera and whose radius is greater than the radius of the rear-facing camera.

### 2. Opening angle

As shown in (1) and (2) of FIG. 2, the inner screen of the electronic device includes a screen A, a screen B, and a bending section. The screen A and the screen B are connected by the bending section, and the screen A and the screen B may be folded onto each other through the bending section. It may be understood that the bending section may conform to a folding structure of the electronic device, or may not conform to the folding structure of the electronic device.

The electronic device in the folded state is used as a reference state. An angle by which a plane on which the screen A is located and a plane on which the screen B is located are rotated with the bending section as an axis may be referred to as an opening angle of the electronic device, or may be referred to as an opening angle of the inner screen. It may be understood that the opening angle of the inner screen may range from 0° and 180° (including 0° and 180°).

In some embodiments of this application, when the opening angle is greater than or equal to a and the opening angle is less than or equal to 180°, the electronic device uses the inner screen for display, and the outer screen of the electronic device is turned off. When the opening angle is less than a and the opening angle is greater than or equal to 0°, the electronic device uses the outer screen for display, and the inner screen of the electronic device is turned off. a is greater than 0° and less than 180°. For example, a may be 30°, 45°, 90°, or 150°.

### 3. Unfolded state, intermediate state, and folded state

In some embodiments of this application, the electronic device may include at least three physical states: an unfolded state, an intermediate state, and a folded state. It may be understood that when the electronic device is in the unfolded state, the intermediate state, and the folded state, the inner screen of the electronic device is correspondingly in an unfolded state, an intermediate state, and a folded state.

The electronic device is in the unfolded state in FIG. 1 and (1) of FIG. 2. In the unfolded state, the opening angle of the inner screen of the electronic device is 180°. To be specific, in the unfolded state, the screen A and the screen B are in a same plane, and the screen A and the screen B are in an unfolded distribution. It may be understood that in the unfolded state, the screen A and the screen B may form a continuous display region through the bending section. The electronic device may use the continuous display region for display.

The electronic device is in the folded state in (4) of FIG. 2. In the folded state, the opening angle of the inner screen is 0°. To be specific, in the folded state, the plane on which the screen A is located is parallel to the plane on which the screen B is located, and the screen A is superimposed on the screen B. It may be understood that in the folded state, the inner screen of the electronic device may be turned off, and only the outer screen is used for display.

The electronic device is the intermediate state in (2) and (3) of FIG. 2. The intermediate state is a state between the unfolded state and the folded state, and may be specifically understood as a state of the inner screen after being changed from the folded state and before being unfolded to the unfolded state in a process of unfolding the inner screen from the folded state. In the intermediate state, the opening angle of the inner screen of the electronic device is a.

It may be understood that in the process in which the electronic device is gradually unfolded from the folded state, the opening angle gradually increases, and the electronic device is changed from the folded state to the intermediate state. When the opening angle reaches 180°, the electronic device is changed from the intermediate state to the unfolded state.

**A hardware structure of an electronic device in embodiments of this application is described below.**

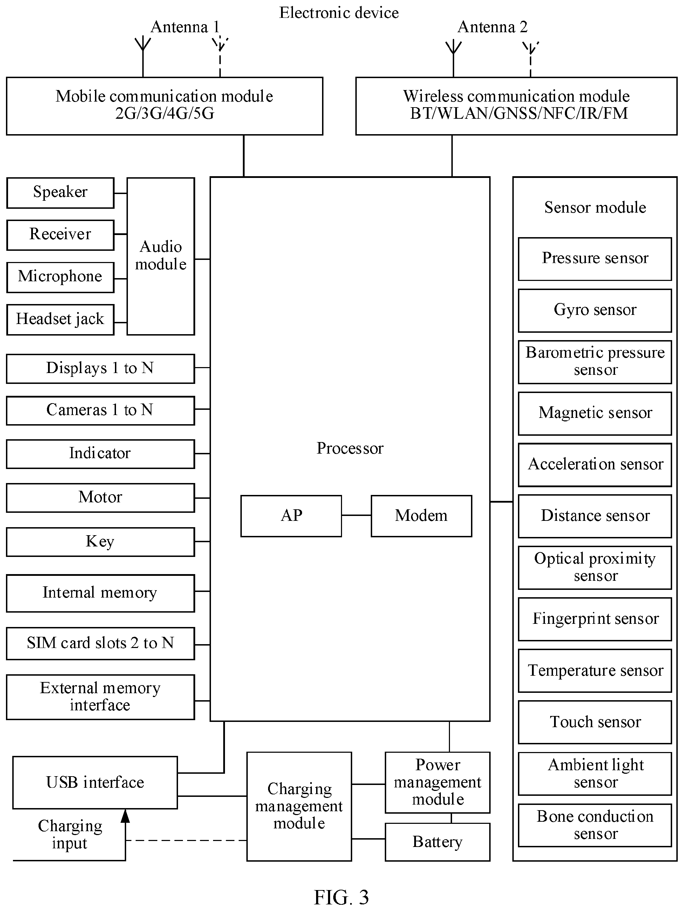

FIG. 3 is a diagram of a hardware structure of an electronic device according to an embodiment of this application.

As shown in FIG. 3, the electronic device may include: a processor, an interface for an external memory, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display, a subscriber identity module (Subscriber Identity Module, SIM) card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that a structure shown in embodiments of this application does not constitute a specific limitation on the electronic device. It may be understood that the components shown in the figure may be implemented in hardware, software, or a combination of software and hardware. In some embodiments of this application, the electronic device may include more components than those shown in the figure. For example, the electronic device may include another type of sensor. In some other embodiments of this application, the electronic device may include fewer components than those shown in the figure, or some components may be combined, or some components may be split, or different component arrangements may be used. An interface connection relationship between modules illustrated in this embodiment of this application is merely an illustrative description, and does not constitute a limitation on a structure of the electronic device.

The processor may include one or more processing units. For example, the processor may include an application processor (Application Processor, AP), a modem (Modem, which may also be referred to as a baseband processor), a graphics processing unit (Graphics Processing Unit, GPU), an image signal processor (Image Signal Processor, ISP), a controller, a video codec, a digital signal processor (Digital Signal Processor, DSP), a neural-network processing unit (Neural-network Processing Unit, NPU), and/or the like. The AP is a processor responsible for running an operating system and an application. The Modem is a processor responsible for processing various communication protocols.

A wireless communication function of the electronic device may be implemented using the antenna 1, the antenna 2, the mobile communication module, the wireless communication module, the Modem, and the like. The Modem may interact with a base station through an antenna (for example, an antenna 1 or an antenna 2). In some embodiments, in the electronic device, the antenna 1 and the mobile communication module are coupled, and the antenna 2 and the wireless communication module are coupled, so that the electronic device can communicate with a network and another device through a wireless communications technology.

The electronic device may implement a display function by using the GPU, the display, the application processor, and the like.

The GPU is a microprocessor for image processing, and connects the display to the application processor. The GPU is configured to: perform mathematical and geometric computation, and render an image. The processor may include one or more GPUs that execute program instructions to generate or change display information.

The display is configured to display an image, a video, or the like. The display includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light-Emitting Diode, AMOLED), a flex light-emitting diode (Flex Light-Emitting Diode, FLED), a mini light-emitting diode (Mini Light-Emitting Diode, Mini LED), a micro light-emitting diode (Micro Light-Emitting Diode, Micro OLED), a micro organic light-emitting diode (Micro Organic Light-Emitting Diode, Micro OLED), a quantum dot light-emitting diode (Quantum Dot Light-Emitting Diode, QLED), or the like.

In some embodiments of this application, the electronic device may include a plurality of displays, and the plurality of displays may include at least one inner screen and at least one outer screen.

In some embodiments of this application, the display panel of the inner screen may be implemented using an OLED, an AMOLED, or a FLED, so that the inner screen is bendable. In this application, the bendable display is referred to as a foldable display. The foldable display may be one screen, or may be a display formed by assembling a plurality of screens. This is not limited in this application.

In some embodiments of this application, the outer screen may include a camera cutout region. For details, refer to (2) to (4) of FIG. 1. In some other embodiments of this application, the outer screen may include a special-shaped border. For details, refer to (5) of FIG. 1.

The camera is configured to capture a still image or a video. The ISP is configured to process data fed back by the camera. Light is transmitted to a photosensitive element of the camera through a lens. An optical signal is converted into an electrical signal, and the photosensitive element of the camera transmits the electrical signal to the ISP for processing, to convert the electrical signal into a visible image. The electronic device may include one or more cameras. In some embodiments of this application, the electronic device may include one or more rear-facing cameras, and may further include one or more front-facing cameras.

In some embodiments of this application, the camera may be specifically a pop-up camera, a flip camera, a camera in a cutout region, or the like. For example, as shown in (1) to (4) of FIG. 1 as well as FIG. 2, the electronic device may include one front-facing camera and a plurality of rear-facing cameras. The front-facing camera may be a camera in a cutout region under the inner screen. The rear-facing cameras may be cameras in a cutout region under the outer screen.

The internal memory may include one or more RAMs and one or more non-volatile memories (Non-Volatile Memory, NVM). The random access memory may be directly read and written by the processor, may be configured to store executable programs (for example, machine instructions) of an operating system or other running programs, or may be configured to store data of users and applications. The nonvolatile memory may also store an executable program, data of a user, data of an application, and the like, which may be loaded into the random access memory in advance for directly reading and writing by the processor. In some embodiments of this application, code for implementing the method in embodiments of this application may be stored in the non-volatile memory.

The interface for an external memory may be configured to connect to an external non-volatile memory, to expand a storage capability of the electronic device.

The electronic device may use the audio module, the speaker, the receiver, the microphone, the headset jack, the application processor, and the like, to implement an audio function.

**The following describes a display method provided in embodiments of this application.**

An electronic device may determine a notification display region in an outer screen based on the position, shape, and size (or referred to as dimension) of a camera cutout region in the outer screen or the location, shape, and length of a special-shaped border of the outer screen. The notification display region may be configured to display a corresponding notification. In some embodiments of this application, the notification display region may be configured to display an important notification. In some other embodiments of this application, the notification display region may be configured to display a banner notification.

In some embodiments of this application, the outer screen of the electronic device may include m camera cutout regions. The sizes of the m camera cutout regions may be the same or may be different. Similarly, the shapes of the m camera cutout regions may be the same or may be different. m is a positive integer. For example, m = 2. For details, refer to FIG. 4, (2), (3), and (5) of FIG. 1, and (3) and (4) of FIG. 2. For another example, m = 4. For details, refer to (4) of FIG. 1.

In some embodiments of this application, the notification display region is a band-shaped region. In a possible implementation, one end or two ends of the band-shaped region are portions of a border of the camera cutout region. In another possible implementation, one end or two ends of the band-shaped region are portions of the special-shaped border of the outer screen.

In some embodiments of this application, the notification display region and a camera cutout region k1 jointly form a partial annular region whose two ends are arcs. The camera cutout region k1 is one camera cutout region of the m camera cutout regions included in the outer screen.

In a possible implementation, the partial annular region is a portion of an annular region formed by a circle 1 and a circle 2, and an arc of an end of the partial annular region is a partial border of the camera cutout region k1. The camera cutout region k1 is a circular region having a diameter of R1, a difference between radii of the circle 1 and the circle 2 is R1, and the center of the circle 1 and the center of the circle 2 are the same as the center of the camera cutout region k2. The camera cutout region k2 is a camera cutout region different from the camera cutout region k1 of the m camera cutout regions included in the outer screen, and the camera cutout region k2 is a circular region having a diameter of R2.

It may be understood that R1 and R2 may be the same or may be different. Specific values of R1 and R2 may be set based on the size of a configured camera. This is not limited in this application.

In a possible implementation, two ends of the partial annular region are both convex arcs.

For example, as shown in FIG. 4, a camera cutout region 1 is represented as a black circular region having a relatively small area in FIG. 4, and a camera cutout region 2 is represented as a black circular region having a relatively large area in FIG. 4. The camera cutout region 1 and the camera cutout region 2 represent regions in the outer screen that are provided with no screen circuit and that are disposed to expose cameras, to be specific, cutout regions in the outer screen. Specifically, as shown in (1) of FIG. 4, the camera cutout region k1 may be the camera cutout region 1, the camera cutout region k2 may be the camera cutout region 2, and R1 is smaller than R2. The notification display region may be z1. z1 is a partial annular region connected to the camera cutout region 1, to be specific, a white region that is connected to the camera cutout region 1 and that is defined by a black line shown in (1) of FIG. 4. In this case, the camera cutout regions 1 and z1 may form a partial annular region with convex arcs at two ends.

In some embodiments of this application, one end of the notification display region is an arc, specifically, a portion of a circular border of the camera cutout region k1, and the other end is a line segment, specifically, a portion of a border of the outer screen.

For example, as shown in (6) of FIG. 4, the camera cutout region k1 may be the camera cutout region 1. The notification display region may be z6. z6 is a partial annular region connected to the camera cutout region 1, to be specific, a white region that is connected to the camera cutout region 1 and that is defined by a black line shown in (6) of FIG. 4. In this case, the camera cutout regions 1 and z1 may form a partial annular region with a convex arc at one end and a line segment at the other end.

In some embodiments of this application, the notification display region may be a partial annular region with arcs at two ends, and the two ends of the partial annular region are respectively a partial border of the camera cutout region k1 and a partial border of the camera cutout region k2. In a possible implementation, two ends of the partial annular region are both concave arcs.

For example, as shown in (2) of FIG. 4, the camera cutout region k1 may be the camera cutout region 1, the camera cutout region k2 may be the camera cutout region 2, and R1 is smaller than R2. The notification display region may be z2. z2 is a partial annular region whose two ends are respectively connected to the camera cutout region 1 and the camera cutout region 2, to be specific, a white region whose two ends are respectively connected to the camera cutout region 1 and the camera cutout region 2 and that is defined by a black line shown in (2) of FIG. 4. It may be understood that two ends of z2 are both concave arcs.

For example, as shown in (5) of FIG. 4, the camera cutout region k1 may be the camera cutout region 1, the camera cutout region k2 may be the camera cutout region 2, and R1 is equal to R2. The notification display region may be z5. z5 is a partial annular region whose two ends are respectively connected to the camera cutout region 1 and the camera cutout region 2, to be specific, a white region whose two ends are respectively connected to the camera cutout region 1 and the camera cutout region 2 and that is defined by a black line shown in (5) of FIG. 4. It may be understood that two ends of z5 are both concave arcs.

In some embodiments of this application, the notification display region and the camera cutout region k1 jointly form a rounded rectangular region. In addition, a height of the rounded rectangular region is equal to a diameter of the camera cutout region k1. A corner radius of the rounded rectangular region is equal to a radius (to be specific, R1/2) of the camera cutout region k1. Two parallel sides of the rounded rectangular region are parallel to two parallel sides of the outer screen (for example, a bottom bezel of the outer screen and a top bezel of the outer screen, or a left bezel of the outer screen and a right bezel of the outer screen).

In a possible implementation, the camera cutout region k1 is a camera cutout region of the m camera cutout regions that is located closest to a bottom bezel of the outer screen when the user uses the electronic device.

For example, as shown in (3) of FIG. 4, m = 2, the camera cutout region k1 may be the camera cutout region 2, the camera cutout region 2 is a camera cutout region of the two camera cutout regions that has a larger area in the outer screen, and the camera cutout region 2 is closer to the bottom bezel of the outer screen than the camera cutout region 1 is. The notification display region may be z3. z3 is a band-shaped region that is connected to the camera cutout region 2 and that has two parallel sides (to be specific, two long sides that are parallel to each other) parallel to a top bezel and the bottom bezel of the outer screen, to be specific, a white region hat is connected to the camera cutout region 2 and that is defined by a black line shown in (3) of FIG. 4. In this case, the camera cutout regions 2 and z3 may form a rounded rectangular region with convex arcs at two ends.

In another possible implementation, the camera cutout region k1 is a camera cutout region of the m camera cutout regions that is located closest to the top bezel of the outer screen when the user uses the electronic device.

For example, as shown in (4) of FIG. 4, m = 2, the camera cutout region k1 may be the camera cutout region 1, the camera cutout region 1 is a camera cutout region of the two camera cutout regions that has a smaller area in the outer screen, and the camera cutout region 1 is closer to the top bezel of the outer screen than the camera cutout region 2 is. The notification display region may be z4. z4 is a band-shaped region that is connected to the camera cutout region 1 and that has two parallel sides (to be specific, two long sides that are parallel to each other) parallel to a left bezel and a right bezel of the outer screen, to be specific, a white region hat is connected to the camera cutout region 1 and that is defined by a black line shown in (3) of FIG. 4. In this case, the camera cutout regions 1 and z4 may form a rounded rectangular region with convex arcs at two ends.

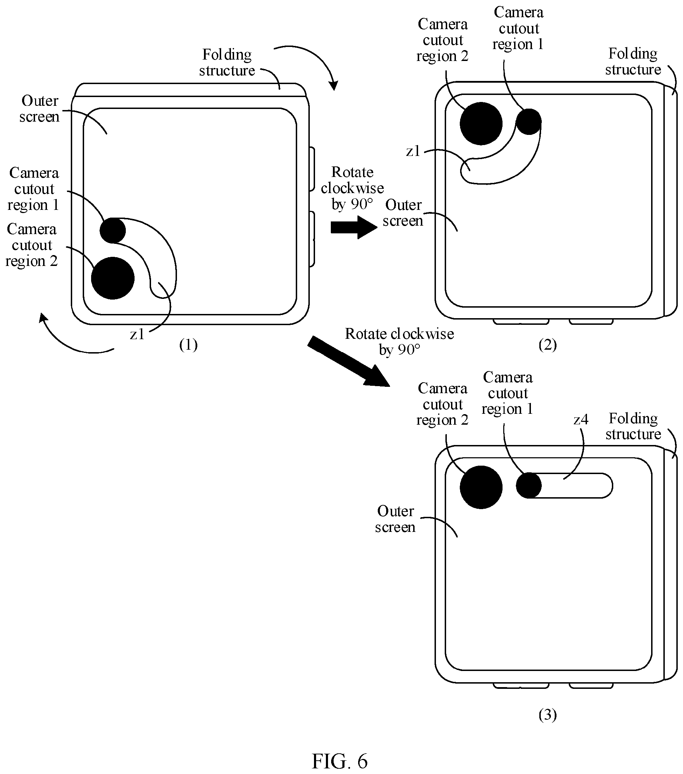

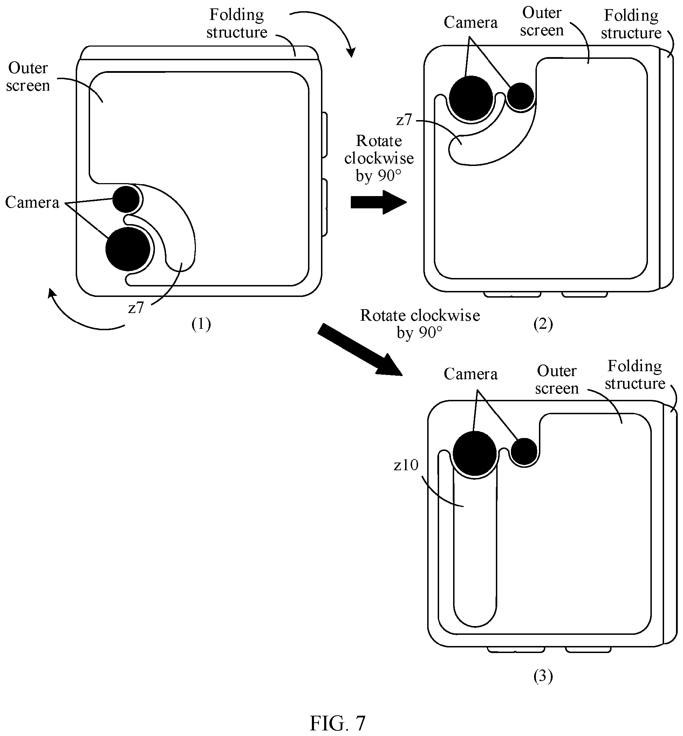

It should be noted that when the electronic device rotates, the outer screen of the electronic device also rotates correspondingly, and a bottom bezel, a top bezel, a left bezel, and a right bezel of the outer screen change as the outer screen rotates (as shown in FIG. 6 and FIG. 7).

In some embodiments of this application, the notification display region may be a partial annular region with arcs at two ends, and an arc at one end or two ends of the partial annular region is a portion of the special-shaped border of the outer screen.

In a possible implementation, an arc of one end of the partial annular region is a concave arc, the concave arc is a portion of the special-shaped border of the outer screen, and an arc of the other end of the partial annular region is a convex arc.

For example, as shown in FIG. 5, the outer screen of the electronic device does not include a camera cutout region, and a position of the outer screen and a position of a camera (which may be a rear-facing camera) located on a same face of the electronic device as the outer screen may not overlap at all. A border that is in the outer screen and that is close to the camera located on the same face of the electronic device as the outer screen is the special-shaped border (highlighted in bold in FIG. 5). Specifically, the notification display region may be z7. z7 is an annular region with one end being a portion of the special-shaped border of the outer screen, to be specific, a white region that has an end being a portion of the special-shaped border of the outer screen close to the camera having a smaller area and that is defined by a black line shown in (1) of FIG. 5. It may be understood that the portion of the special-shaped border of the outer screen included in z7 is a concave arc, and the other end thereof is a convex arc.

In another possible implementation, arcs at two ends of the partial annular region are both concave arcs, and the arcs at the two ends are both portions of the special-shaped border of the outer screen.

For example, as shown in (2) of FIG. 5, sizes of two rear-facing cameras included in the electronic device are different. As shown in (3) of FIG. 5, sizes of the two rear-facing cameras included in the electronic device are the same. The notification display region may be z8. z8 is an annular region with two ends being portions of the special-shaped border of the outer screen, to be specific, a white region that has two ends being portions of the special-shaped border of the outer screen close to the two rear-facing cameras and that is defined by a black line shown in (2) of FIG. 5. It may be understood that two ends of z8 are both concave arcs. Similarly, the notification display region may alternatively be z9. For details, refer to related descriptions of z8. Details are not described herein again in this application. It may be understood that as shown in (2) and (3) of FIG. 5, in some embodiments of this application, the quantity and size of the rear-facing cameras in the electronic device may not affect the shape of the notification display region, but affect the size of the notification display region. For example, an area of z9 is greater than an area of z8.

In some embodiments of this application, the notification display region may be a band-shaped region whose two ends are arcs, an arc at one end of the band-shaped region is a portion of the special-shaped border of the outer screen, and two long sides of the band-shaped region are both parallel to the top bezel and the bottom bezel of the outer screen.

For example, the notification display region may be z10. z10 is a band-shaped region that has an end being a portion of the special-shaped border of the outer screen and has two parallel sides (to be specific, two long sides that are parallel to each other) parallel to the top bezel and the bottom bezel of the outer screen, to be specific, a white band-shaped region that has an end being a portion of the special-shaped border of the outer screen close to the camera having a larger area and that is defined by a black line region shown in (4) of FIG. 5.

It may be understood that with reference to the electronic device in a folded state with the outer screen facing the user and a folding structure being located at the top, after the electronic device is rotated anticlockwise by a specific angle, a specific form (for example, the position, shape, and size) of the notification display region in the outer screen may remain unchanged or may change accordingly.

For example, with reference to the electronic device shown in (1) of FIG. 6, in this case, the electronic device is in the folded state, the outer screen faces the user, and the folding structure of the electronic device is located at the top. In this case, the user may rotate the electronic device by clockwise 90° to obtain the electronic device shown in (2) and (3) of FIG. 6. In this case, the outer screen of the electronic device still faces the user, but the folding structure of the electronic device is located on the right side. Compared with the electronic device shown in (1) of FIG. 6, in (2) of FIG. 6, the notification display region displayed on the outer screen is still z1, the shape and size of the notification display region remain unchanged, and only the position of the notification display region appears changed to the user due to the rotation of the electronic device. Compared with the electronic device shown in (1) of FIG. 6, in (3) of FIG. 6, the notification display region displayed on the outer screen changes from z1 to z4, and changes from a circular region to the band-shaped region having parallel sides. In addition, in addition to the change in the shape, the position of the notification display region also changes. It may be understood that sizes of z1 and z4 may be the same or may be different.

For example, with reference to the electronic device shown in (1) of FIG. 7, in this case, the electronic device is in the folded state, the outer screen faces the user, and the folding structure of the electronic device is located at the top. In this case, the electronic device may be rotated clockwise by 90° to obtain the electronic device shown in (2) and (3) of FIG. 7. In this case, the outer screen of the electronic device still faces the user, but the folding structure of the electronic device is located on the right side. Compared with the electronic device shown in (1) of FIG. 7, in (2) of FIG. 7, the notification display region displayed on the outer screen is still z7, the shape and size of the notification display region remain unchanged, and only the position of the notification display region appears changed to the user due to the rotation of the electronic device. Compared with the electronic device shown in (1) of FIG. 7, in (3) of FIG. 7, the notification display region displayed on the outer screen changes from z7 to z10, and changes from a circular region to the band-shaped region having parallel sides, and the position of the notification display region also changes. It may be understood that sizes of z7 and z10 may be the same or may be different.

According to the foregoing method, the electronic device may determine, by integrating the position of the camera cutout region or the special-shaped border, a region for displaying a corresponding notification, thereby improving the utilization of a display region of an outer screen, and avoiding the underutilization of a portion of a display region due to the presence of a camera cutout region or a special-shaped border in the outer screen.

**The following describes a display method provided in embodiments of this application in detail with reference to exemplary user interfaces provided in embodiments of this application.**

It may be understood that the following exemplary user interfaces (as shown in FIG. 8A(1) to FIG. 9F(4)) provided in embodiments of this application are all user interfaces displayed by an electronic device that is in a folded state and that has an outer screen including a camera cutout region. It should be noted that embodiments of this application may further be applied to an electronic device with an outer screen including a special-shaped border. For user interfaces displayed on such an electronic device, refer to the user interfaces displayed on the electronic device with the outer screen including the camera cutout region provided in embodiments of this application. Details are not described herein again in this application.

It should be noted that the notification display regions in the user interfaces shown in FIG. 8A(1) to FIG. 9F(4) are merely examples provided in this application, and may be specifically other display regions, for example, notification display regions in other forms shown in FIG. 4 and FIG. 5.
**1. When the outer screen is in a screen-locked state, corresponding content is displayed in a notification display region (**FIG. 8A(1) to FIG. 8D(4)**).**

It may be understood that the electronic device is in the screen-locked state in all the following FIG. 8A(1) to FIG. 8D(4).

When the electronic device is in the folded state, a lock screen interface may be displayed on the outer screen. For example, an example in which the lock screen interface is a user interface 10 is used for description. As shown in FIG. 8A(1), the electronic device may display the user interface 10 on the outer screen. It may be understood that the camera cutout region in the outer screen is provided with no corresponding circuit, and cannot be used for display (which is represented by a black circle in diagrams of corresponding interfaces). In some embodiments of this application, the user interface 10 may include an icon corresponding to an application that can be used in the screen-locked state, for example, a camera application icon.
1. If **no important notification is generated, specific content is displayed in a notification display region, or no special display is performed.**

In some embodiments of this application, when the electronic device is in the screen-locked state and no important notification is generated, the electronic device may display specific content such as time, date, weather, a picture, or an animation in the notification display region. For example, as shown in FIG. 8A(2), the electronic device may display the user interface 11 in the screen-locked state. The user interface 11 may include a display region 111. The display region 111 may include current weather (for example, cloudy) and a current temperature (for example, 19°C). The display region 111 is a notification display region. For details, refer to related descriptions of z1 shown in FIG. 4. Details are not described in this application again.

In some embodiments of this application, when the electronic device is in the screen-locked state and no important notification is generated, instead of performing special display in the notification display region (to be specific, displaying content in the notification display region, the electronic device may display an original lock screen interface (for example, the user interface 10).

**2. If an important notification is generated, the important notification is displayed in a notification display region.**

It should be noted that the electronic device may select a notification display region of a corresponding size based on the amount of content (for example, the amount of text or the size of an image) of the important notification. For example, when the important notification has a large amount of content, the electronic device may select z3 shown in (3) of FIG. 4 as the notification display region and display specific content of the important notification in z3. When the important notification has a small amount of content, the electronic device may select (4) of FIG. 4 as the notification display region and display specific content of the important notification in z1.

In some embodiments of this application, the important notification may include a smart reminder generated based on usage habits and a scenario of a user. For example, after a boarding time is reached, the electronic device may generate a boarding reminder. For another example, after an aircraft arrives, the electronic device may generate a baggage carousel reminder.

In some embodiments of this application, the important notification may include a notification that requires prolonged attention of the user and that may have status updates.

In some embodiments of this application, the important notification may include a specific matter of a present application. It may be understood that the present application may be an application of a specific category, or may be an application in a specific list. This is not limited in this application. For example, the present application may be a schedule planning application, and the specific matter may be a schedule reminder.

For example, the important notification may include any one or more of the following: related information in a call process (for example, a call status, call duration, and phone numbers of a phone call, and a call status, call duration, or call participants of a voice/video call performed in communication software), a travel status (for example, related information of flights/trains and high-speed rails/subways/ride-hailing services), an exercise status (for example, an exercise type or exercise duration), related information in a recording process (for example, recording duration), a package status (for example, a package pickup code), a geofence-based ride code, or geofence-based check-in.

It may be understood that the important notification may further specifically include other content. This is not limited in this application.

It should be noted that the important notification is different from a general notification (for example, a general advertising push or message reminders of some applications). In a possible implementation, the general notification may be a notification that is displayed only in a notification bar and that does not interrupt operations of the user.

In some embodiments of this application, the electronic device may distinguish an important notification from a general notification by setting priorities. A priority of the important notification is higher than a priority of the general notification. For example, the priority of the important notification may be set to IMPORTANCE_HIGH, and the priority of the general notification may be set to IMPORTANCE_DEFAULT, IMPORTANCE_LOW, or IMPORTANCE_MIN.

In some embodiments of this application, when the electronic device is in the screen-locked state and generates one or more important notifications, the electronic device may display the one or more important notifications in the notification display region.

For example, after a boarding time is reached, the electronic device may generate a boarding reminder. For ease of description, this application records the boarding reminder as a notification 1. In a possible implementation, the electronic device may display a user interface 12 shown in FIG. 8A(3). The notification 1 is displayed in the display region 111 included in the user interface 12. Specific content of the notification 1 displayed in the display region 111 may include "52K" and "Boarding", indicating that the boarding gate is 52K and prompting that boarding has begun. In another possible implementation, the electronic device may display a user interface 13 shown in FIG. 8A(4). The user interface 13 may include a display region 131. The notification 1 is displayed in the display region 131. Similar to the notification 1 displayed in the display region 111, specific content of the notification 1 displayed in the display region 131 may include "52K" and "Boarding", indicating that the boarding gate is 52K and prompting that boarding has begun. The display region 131 is a notification display region. For details, refer to related descriptions of z3 shown in FIG. 4. Details are not described in this application again.

It may be understood that when a same notification is displayed in notification display regions having different areas, specific content of the same notification displayed in the notification display regions having different areas may be the same or may be different. For example, an area of the display region 131 is larger than an area of the display region 111. Therefore, compared with the notification 1 displayed in the display region 111, the electronic device displays more specific content of the notification 1 in the display region 131, for example, a flight number, flight time, boarding remaining time, and a boarding pass widget.

In some embodiments of this application, if only one important notification needs be to displayed in the notification display region, the electronic device may continuously display the important notification until the user triggers deletion of the important notification or a task corresponding to the important notification ends.

For example, as shown in FIG. 8A(3), the electronic device may detect a user operation of swiping down along the arc of the display region 111 on the display region 111. In response to the user operation, the electronic device may delete the notification 1 and stop displaying the notification 1 in the display region 111. Similarly, as shown in FIG. 8A(4), the electronic device may detect a user operation of swiping right in the display region 131. In response to the user operation, the electronic device may delete the notification 1 and stop displaying the notification 1 in the display region 131.

For example, after boarding ends, the electronic device may delete the notification 1 shown in FIG. 8A(3) and FIG. 8A(4). In a subsequent process, the electronic device may continue to update a flight status, and generate a new notification (for example, a landing reminder or a baggage carousel reminder) based on the updated flight status.

In some embodiments of this application, if a plurality of important notifications need to be displayed in the notification display region, the electronic device may fill the notification display region with another color to display the plurality of important notifications.

For example, when the important notification that currently needs to be displayed in the notification display region is only the notification 1, the electronic device may display a user interface 12 shown in FIG. 8A(3). If the user makes a call subsequently, the electronic device may generate a notification corresponding to the current call to remind the user of information such as call duration and call participants during the current call. For ease of description, in this application, the notification corresponding to the current call is recorded as a notification 2. It may be understood that after the electronic device generates the notification 2, the important notification that needs to be displayed in the notification display region includes the notification 1 and the notification 2. Correspondingly, the electronic device may display a user interface 14 shown in FIG. 8B(1). Similar to the user interface 12, the user interface 14 may also include a display region 111. However, a difference lies in that the display region 111 of the user interface 14 is filled with black.

In some embodiments of this application, if a plurality of important notifications need to be displayed in the notification display region, the notification display region may display a shadow effect. It may be understood that this application does not specifically limit the color, transparency, size, blurring degree, angle, and distance of the shadow effect. For example, the shadow effect may be displayed in the notification display region (for example, an inner shadow) or may be displayed outside the notification display region (for example, an outer shadow).

For example, according to the foregoing description, after the electronic device generates the notification 2, the important notification that needs to be displayed in the notification display region includes the notification 1 and the notification 2. Correspondingly, the electronic device may display a user interface 16 shown in FIG. 8B(3). Similar to the user interface 12, the user interface 16 may also include a display region 111. However, a difference lies in that a black shadow is added to a border line of the display region 111 of the user interface 16.

In some embodiments of this application, if a plurality of important notifications need to be displayed in the notification display region, the electronic device may automatically switch to a next important notification for display after duration of displaying an important notification reaches t1. It may be understood that t1 may be set according to an actual requirement. This is not limited in this application. For example, t1 may be 10 seconds.

For example, as shown in FIG. 8B(1), the electronic device may display the notification 1 in the display region 111. After duration of displaying the notification 1 by the electronic device reaches 10 s, the electronic device may correspondingly display a user interface 15 shown in FIG. 8B(2). Content included in the display region 111 of the user interface 15 is switched to specific content of the notification 2. Similarly, as shown in FIG. 8B(3), the electronic device may display the notification 1 in the display region 111. After duration of displaying the notification 1 by the electronic device reaches 10 s, the electronic device may correspondingly display a user interface 17 shown in FIG. 8B(4). Content included in the display region 111 of the user interface 17 is switched to the specific content of the notification 2.

In some embodiments of this application, if a plurality of important notifications need to be displayed in the notification display region, the user may trigger the electronic device to switch to the plurality of important notifications for display.

For example, as shown in FIG. 8B(1), the electronic device may display the notification 1 in the display region 111. The electronic device may detect a user operation of swiping down along the arc of the display region 111 on the display region 111. In response to the user operation, the electronic device may switch the notification displayed in the display region 111, and correspondingly display the user interface 15 shown in FIG. 8B(2). Content included in the display region 111 of the user interface 15 is switched to specific content of the notification 2. Similarly, as shown in FIG. 8B(3), the electronic device may display the notification 1 in the display region 111. The electronic device may detect a user operation of swiping down along the arc of the display region 111 on the display region 111. In response to the user operation, the electronic device may switch the notification displayed in the display region 111, and correspondingly display the user interface 17 shown in FIG. 8B(4). Content included in the display region 111 of the user interface 17 is switched to the specific content of the notification 2.

In some embodiments of this application, if a plurality of important notifications need to be displayed in the notification display region, the electronic device may display the plurality of important notifications alternately until the user triggers deletion of a corresponding important notification or a task corresponding to a corresponding important notification ends.

For example, the notification 1 and the notification 2 need to be displayed alternately in the notification display region. As shown in FIG. 8B(3) and FIG. 8B(4), when the electronic device displays the notification 2, the electronic device may detect a user operation (for example, a touch-and-hold and a double-tap) performed on the display region 111, and in response to the user operation, the electronic device may delete the notification 2, so that only the notification 1 needs to be displayed in the notification display region. In this case, the electronic device may display a user interface 12 shown in FIG. 8A(3).

It may be understood that compared with a specific operation of triggering deletion of a corresponding important notification by the user when a plurality of important notifications need to be displayed in the notification display region, a specific operation of triggering deletion of a corresponding important notification by the user may be different when only one important notification needs to be displayed in the notification display region. For example, when a plurality of important notifications need to be displayed in the notification display region, the specific operation of triggering deletion of a corresponding important notification by the user may be an operation such as a touch-and-hold or a double-tap. However, when only one important notification needs to be displayed in the notification display region, a specific operation of triggering deletion of a corresponding important notification by the user may be an operation of touching the notification display region and swiping down along the arc of the notification display region.

In some embodiments of this application, when to-be-displayed content (which may be understood as a part or all of content of an important notification) corresponding to all important notifications (one or more important notifications) cannot be fully displayed in the notification display region, the electronic device may display the to-be-displayed content in a scrollable manner. It may be understood that a scrolling direction may be adapted to the shape of the notification display region. For example, the scrolling direction may be a downward direction along a side of a long arc of the display region 111.

In some embodiments of this application, the user may trigger the electronic device to display a details card corresponding to an important notification in the notification display region.

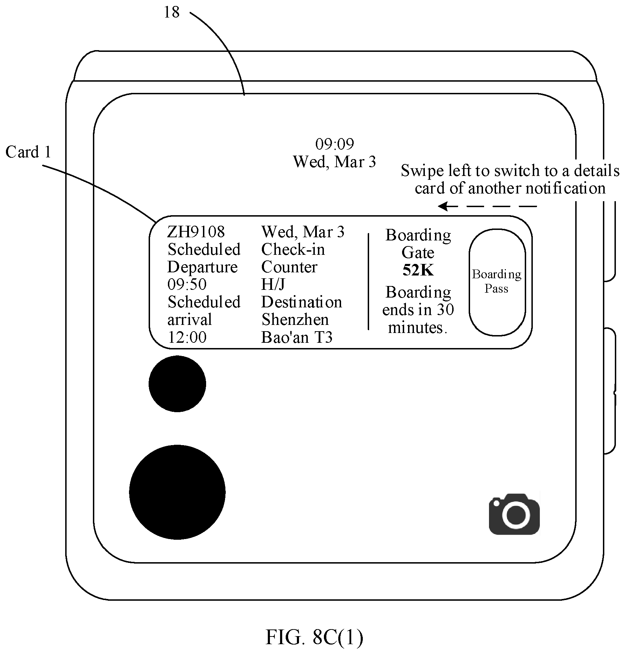

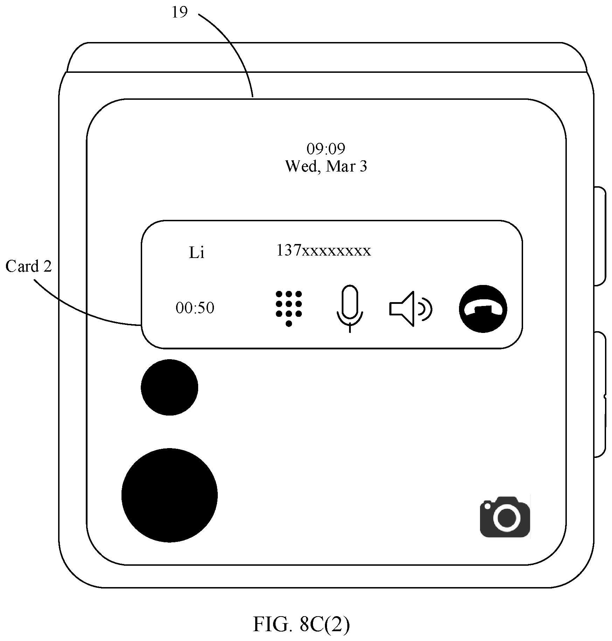

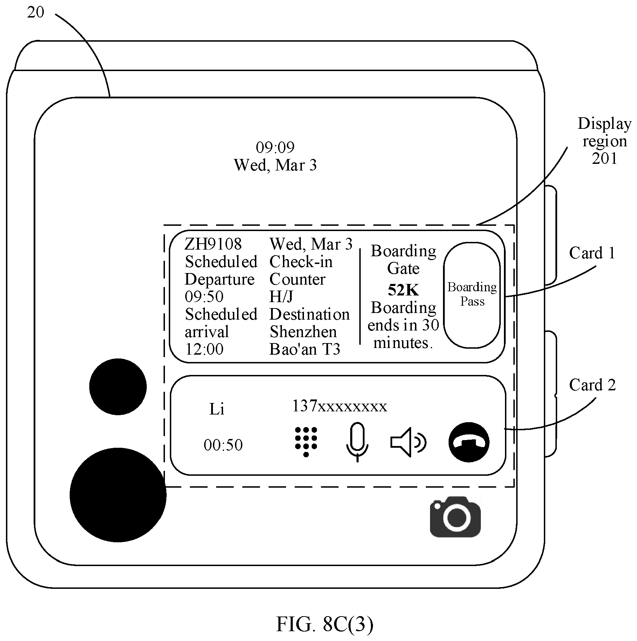

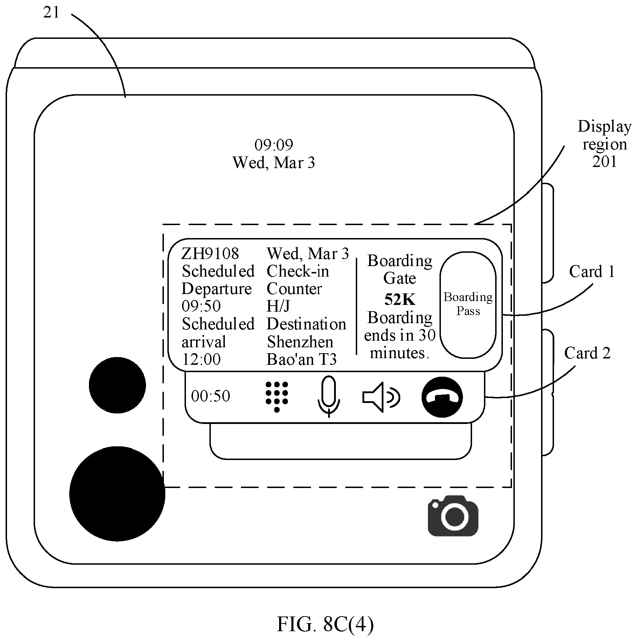

For example, the electronic device may detect a user operation (for example, a tap) performed on the display region 111 included in the user interface 12 or a user operation (for example, a tap) performed on the display region 131 included in the user interface 13. In response to the user operation, the electronic device may display a user interface 18 shown in FIG. 8C(1). The user interface 18 may include a card 1. The card 1 is a details card corresponding to the notification 1. Compared with the notifications 1 displayed in the display region 111 and the display region 131, instead of including only information related to boarding, the card 1 may include more information related to the notification 1. As shown in FIG. 8C(1), the card 1 may include a scheduled departure time, a scheduled arrival time, a check-in counter, a destination, and the like of a flight. Same as the display region 131, the card 1 may also include a boarding pass widget, and the boarding pass widget may be configured to trigger the electronic device to quickly display an electronic boarding pass. It should be noted that the electronic device shown in FIG. 8A(4) and FIG. 8C(1) is in the screen-locked state. If the user needs to tap the boarding pass widget to trigger the electronic device to quickly display the electronic boarding pass, the user first needs to unlock the electronic device.

In some embodiments of this application, if a plurality of important notifications need to be displayed in the notification display region, the user may trigger the electronic device to display a details card corresponding to an important notification currently displayed in the notification display region, and trigger the electronic device to switch details cards corresponding to different important notifications for display.

For example, as shown in FIG. 8B(1) and FIG. 8B(3), the electronic device may detect a user operation (for example, a tap) performed on the display region 111. In response to the user operation, the electronic device may display the user interface 18 shown in FIG. 8C(1). The user interface 18 may include the details card corresponding to the notification 1, to be specific, the card 1. The electronic device may detect a user operation of swiping left on the card 1, and in response to the user operation, the electronic device may display a user interface 19 shown in FIG. 8C(2). The user interface 19 may include a details card corresponding to the notification 2, to be specific, a card 2.

In some embodiments of this application, if a plurality of important notifications need to be displayed in the notification display region, the user may trigger the electronic device to display a notification list. In a possible implementation, the notification list may include details cards corresponding to the plurality of important notifications.

For example, as shown in FIG. 8B(1) and FIG. 8B(3), the electronic device may detect a user operation (for example, a tap) performed on the display region 111. In response to the user operation, the electronic device may display the user interface 20 shown in FIG. 8C(3). The user interface 20 may include a display region 201. The display region 201 may be configured to display the notification list. Specifically, as shown in FIG. 8C(3), the display region 201 may include a card 1 and a card 2.

It may be understood that when a quantity of important notifications reaches a preset quantity, the electronic device cannot fully display details cards corresponding to all important notifications. In this case, the electronic device may display details cards corresponding to some important notifications in a collapsed manner. It may be understood that the preset quantity may be set according to an actual requirement. This is not limited in this application. For example, the preset quantity may be 3.

When the quantity of important notifications is 3, a quantity of corresponding details cards is also 3. The electronic device cannot fully display content of the three details cards, and may fully display content of only one of the details cards and display other two details cards in a collapsed manner. Specifically, when the quantity of notifications that need to be displayed in the notification display region is 3, the electronic device may display the user interface shown in FIG. 8B(1) or FIG. 8B(3). Further, the electronic device may detect a user operation (for example, a tap) performed on the display region 111 in the user interface shown in FIG. 8B(1) or FIG. 8B(3), and in response to the user operation, the electronic device may display a user interface 21 shown in FIG. 8C(4). Same as the user interface 20, the user interface 21 may also include a display region 201. A difference from the user interface 20 lies in that a quantity of cards included in the display region 201 of the user interface 21 is greater than a quantity of cards included in the display region 201 of the user interface 20. In addition, among the three cards included in the display region 201 of the user interface 21, only one card is fully displayed, and the remaining two cards are displayed in a collapsed manner.

It may be understood that a priority of the important notification is higher than a priority of the general notification, which means that when display space is limited, the electronic device may preferentially display the important notification.

In some embodiments of this application, when the electronic device is in the screen-locked state and generates the general notification, the electronic device may display the general notification in another display region on the display different from the notification display region.

In some embodiments of this application, when the electronic device is in the screen-locked state and generates the general notification, the electronic device may display all or a part of content of the general notification in another display region on the display different from the notification display region.

In some embodiments of this application, when the electronic device is in the screen-locked state and generates the general notification, the electronic device may display the quantity of general notifications in another display region on the display different from the notification display region.

In some embodiments of this application, when the electronic device is in the screen-locked state and generates the general notification, if the another display region on the display different from the notification display region is insufficient to display all or a part of content of all general notifications, the electronic device may display the quantity of general notifications in the another display region on the display different from the notification display region.

It may be understood that specific positions of a display region configured to display all or a part of content of a general notification and a display region configured to display a quantity of general notifications are not limited in this application.

For example, after generating the two important notifications, namely, the notification 1 and the notification 2, the electronic device may place the two important notifications in the notification display region for display. For details, refer to FIG. 8B(1) and FIG. 8B(3). Subsequently, the electronic device may generate three general notifications, and display the three general notifications in another display region different the notification display region or display a quantity of the three general notifications. In a possible implementation, after generating the three general notifications, the electronic device may display a user interface 22 shown in FIG. 8D(1). The user interface 22 may include a display region 221. The display region 221 is located vertically above the display region 111. The display region 221 may include a quantity of general notifications that need to be displayed. In another possible implementation, after generating the three general notifications, the electronic device may display a user interface 23 shown in FIG. 8D(2). The user interface 23 may include a display region 231. The display region 231 is located on the right side of the display region 111. The display region 231 may include a quantity of general notifications that need to be displayed.

In some embodiments of this application, if an important notification that needs to be displayed and a general notification that needs to be viewed both exist in the electronic device, the user may trigger the electronic device to display the notification list. The notification list may include a details card corresponding to the important notification and a details card corresponding to the general notification.

In a possible implementation, if the electronic device detects a user operation performed on a display region (to be specific, a notification display region) in which the important notification is located, the important notification is located on top in the notification list correspondingly displayed by the electronic device. If the electronic device detects a user operation performed on a display region in which the general notification is located, the general notification is located on top in the notification list correspondingly displayed by the electronic device.

For example, as shown in FIG. 8D(1) and FIG. 8D(2), the electronic device may detect a user operation (for example, a tap) performed on the display region 111. In response to the user operation, the electronic device may display the user interface 24 shown in FIG. 8D(3). The user interface 24 may include a display region 201. The display region 201 may include a notification list. As shown in FIG. 8D(3), the display region 201 may include a card 1, a card 2, and details cards corresponding to three general notifications. The card 1 and the card 2 are located above the details cards corresponding to the three general notifications. In addition, when the electronic device detects a user operation performed on the display region 111, the notification 1 is displayed in the display region 111, and a details card (to be specific, the card 1) corresponding to the notification 1 is located at the uppermost layer of the notification list.

For example, the electronic device may detect a user operation (for example, a tap) performed on the display region 221 or the display region 231. In response to the user operation, the electronic device may display the user interface 25 shown in FIG. 8D(4). Same as the user interface 24, the user interface 25 may also include a display region 201. A difference from the user interface 24 lies in that details cards corresponding to three general notifications in the user interface 25 are located above the card 1 and the card 2. It may be understood that a layer sequence of the details cards corresponding to the three general notifications may be determined based on generation time of the three general notifications. In a possible implementation, a details card corresponding to a general notification with earlier generation time is located at a lower layer, and a details card corresponding to a general notification with later generation time is located at an upper layer.

It may be understood that the above mostly uses an example in which the notification display region is the display region 111 for description, and should not be considered as a limitation to this application. The notification display region may alternatively be in another shape and located at another position (for example, the display region 131), and is not limited to the display region 111. For a specific implementation thereof, refer to the related descriptions of the display region 111 given above.

2. When the outer screen is in an unlocked state, a banner notification and an important notification are displayed in the notification display region (FIG. 9A(1) to FIG. 9F(4)).

It should be noted that the electronic device may select a notification display region of a corresponding size based on the amount of content (for example, the amount of text or the size of an image) of the banner notification. For example, when the banner notification has a large amount of content, the electronic device may select z3 shown in (3) of FIG. 4 as the notification display region and display specific content of the banner notification in z3. When the banner notification has a small amount of content, the electronic device may select (4) of FIG. 4 as the notification display region and display specific content of the banner notification in z1.

It may be understood that the banner notification is a notification form when the electronic device is in the unlocked state. When duration of displaying the banner notification reaches t2, the banner notification automatically disappears. It may be understood that t2 may be set according to an actual requirement. This is not limited in this application. For example, t2 may be 5 seconds. It may be understood that t2 and t1 may be the same or may be different.

In some embodiments of this application, the generation and display of the banner notification are related to an application in the electronic device. If the user enables the permission for the application to send a banner notification or the permission for the application to send a banner notification is enabled by default, the application may generate a banner notification and display the banner notification on a display of the electronic device.

It may be understood that the important notification in this application is different from the banner notification. It should be noted that after generating the important notification, the electronic device may display the important notification for a long time, to facilitate viewing by the user at any time. For example, the electronic device may display the important notification in a status bar for a long time or display the important notification for a long time by integrating a camera cutout or in another manner.

It may be understood that the user may unlock the outer screen in a manner such as facial unlocking or fingerprint unlocking, and correspondingly, the electronic device changes from a screen-locked state to the unlocked state.

For example, the electronic device may start a rear-facing camera to recognize a user facial image, and compare the user facial image with a stored user facial image. In this case, the electronic device may display a user interface 26 shown in FIG. 9A(1). After it is determined through comparison that user faces are consistent, the electronic device may display a user interface 27 shown in FIG. 9A(2). The user interface 27 displays a page in which application icons are placed. The page may include a plurality of application icons (for example, a weather application icon, a calendar application icon, an email application icon, a settings application icon, an application store application icon, and a gallery application icon). The user interface 27 may further include a status bar 271. The time, network signal, and battery level may be displayed in the status bar 271.

For example, as shown in FIG. 9A(1), the user may place a finger on a power button. Correspondingly, the electronic device may recognize a user fingerprint obtained on the power button, and compare the user fingerprint with a stored user fingerprint. After it is determined through comparison that the user fingerprints are consistent, the electronic device may display a user interface 27 shown in FIG. 9A(2).

In some embodiments of this application, when the electronic device is in the unlocked state and generates a banner notification, the electronic device may display the banner notification in the notification display region.

For example, after receiving a new chat message, a communication application in the electronic device may generate a corresponding banner notification. For ease of description, this application records the banner notification as a notification 3. In a possible implementation, the electronic device may display a user interface 28 shown in FIG. 9A(3). The user interface 28 may include a display region 111. The notification 3 is displayed in the display region 111. The notification 3 displayed in the display region 111 may specifically include the new chat message. It may be understood that when the display region 111 cannot fully display the new chat message, the electronic device may display the new chat message in the display region 111 in a scrollable manner. In another possible implementation, the electronic device may display a user interface 29 shown in FIG. 9A(4). The user interface 29 may include a display region 131. The notification 3 is displayed in the display region 131. Similar to the notification 3 displayed in the display region 111, the notification 3 displayed in the display region 131 may include the new chat message.

According to the foregoing descriptions, when a same notification is displayed in notification display regions having different areas, specific content of the same notification displayed in the notification display regions having different areas may be the same or may be different. For example, an area of the display region 131 is larger than an area of the display region 111. Therefore, compared with the notification 3 displayed in the display region 111, the electronic device may display more specific content of the notification 3 in the display region 131, for example, a complete chat message.

In some embodiments of this application, after the duration of displaying the banner notification in the notification display region by the electronic device reaches t2, the electronic device stops displaying the banner notification in the notification display region. In some other embodiments of this application, when the duration of displaying the banner notification in the notification display region by the electronic device does not reach t2, the user may trigger the electronic device to stop displaying the corresponding banner notification in the notification display region.

In some embodiments of this application, after the notification display region no longer displays the banner notification, the electronic device may display an application icon corresponding to the banner notification in the status bar.

For example, as shown in FIG. 9A(3), the electronic device may detect a user operation of swiping down along the arc of the display region 111 on the display region 111. In response to the user operation, the electronic device may display a user interface 30 shown in FIG. 9A(5). The user interface 30 does not include the notification 3, and the status bar 271 in the user interface 30 may include an icon 301. The icon 301 is an icon corresponding to the communication application that generates the notification 3. Similarly, as shown in FIG. 9A(4), the electronic device may detect a user operation of swiping right on the display region 131, and in response to the user operation, the electronic device may display a user interface 30 shown in FIG. 9A(5). Similarly, after the duration of displaying the notification 3 in the display region 111 or the display region 131 reaches 5 seconds, the electronic device may automatically display the user interface 30 shown in FIG. 9A(5).

In some embodiments of this application, the user may trigger the electronic device to display an application interface corresponding to the banner notification in the notification display region.

For example, as shown in FIG. 9A(3) and FIG. 9A(4), the electronic device may detect a user operation (for example, a tap) performed on the display region 111 included in the user interface 28 or a user operation (for example, a tap) performed on the display region 131 included in the user interface 29. In response to the user operation, the electronic device may display a user interface 31 shown in FIG. 9A(6). The user interface 31 is an interface of the communication application that generates the notification 3. The user interface 31 may include a new chat message received by the communication application.

In some embodiments of this application, before the electronic device is unlocked, if an important notification that needs to be displayed still exists in the notification display region of the electronic device, the electronic device may directly display the important notification at a specific position in the status bar (for example, display the important notification by setting a capsule-shaped region in the status bar). It may be understood that specific content of the important notification displayed in the notification display region when the electronic device is in the screen-locked state may be different from specific content of the important notification displayed in the status bar when the electronic device is in the unlocked state.

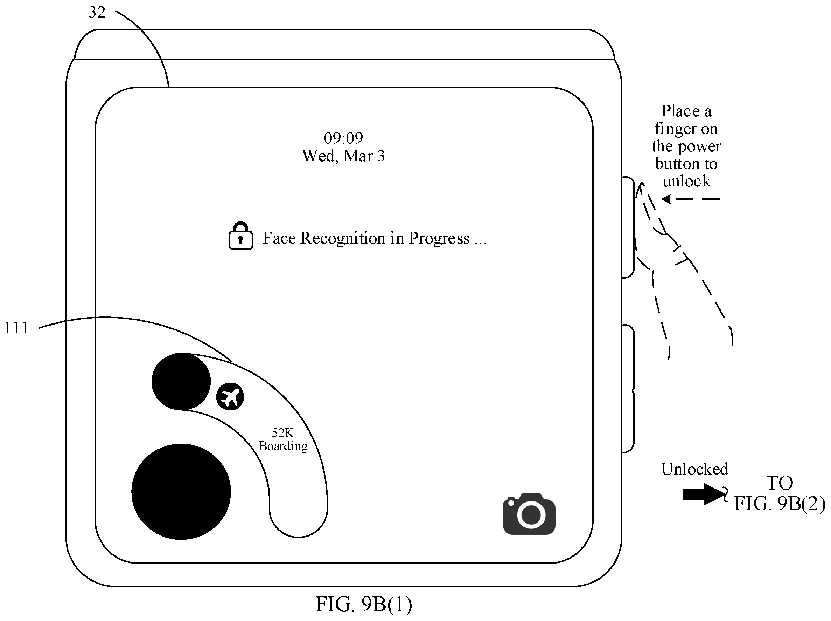

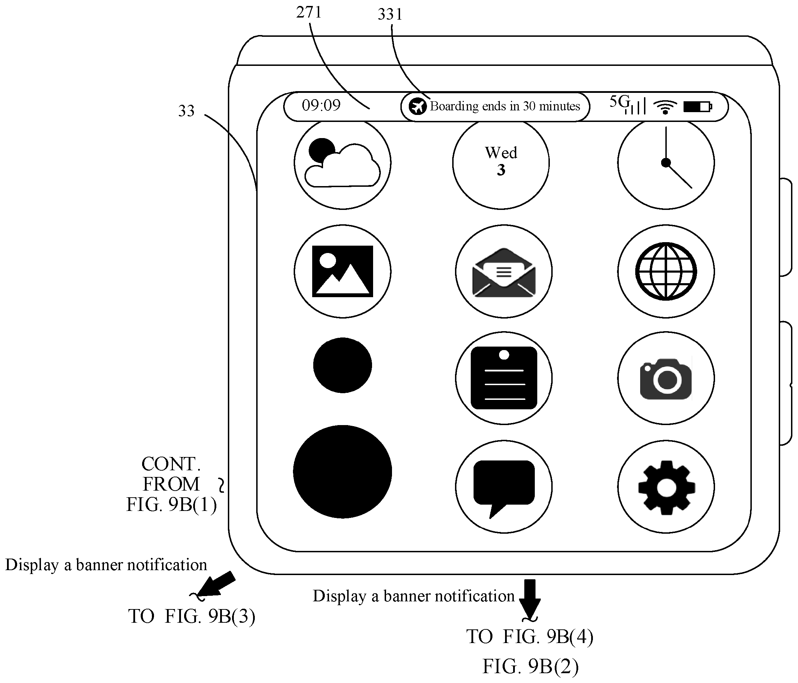

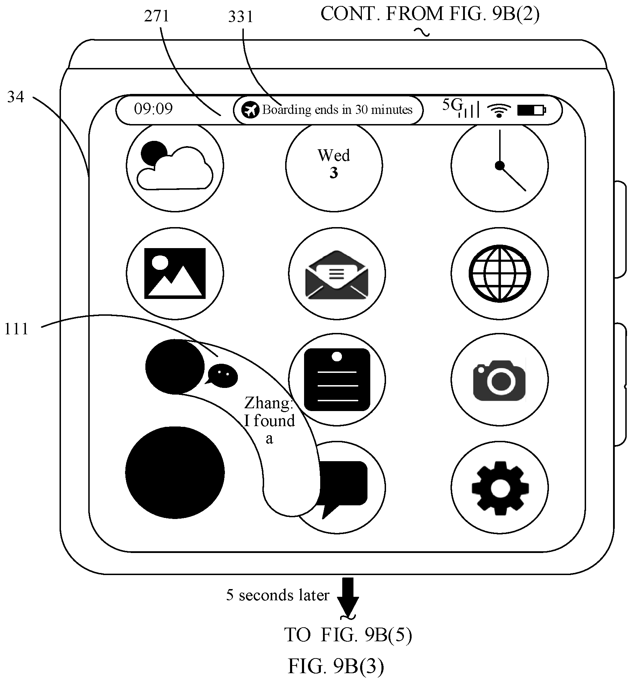

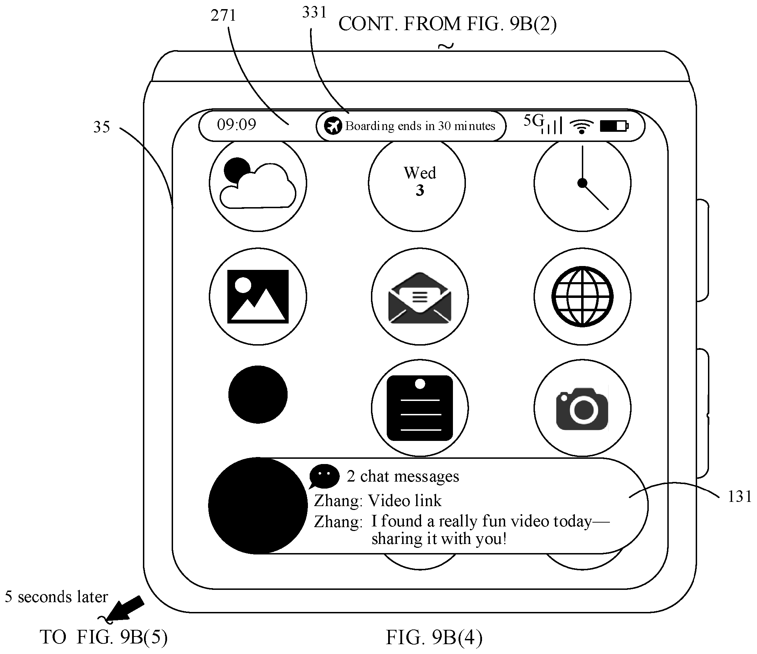

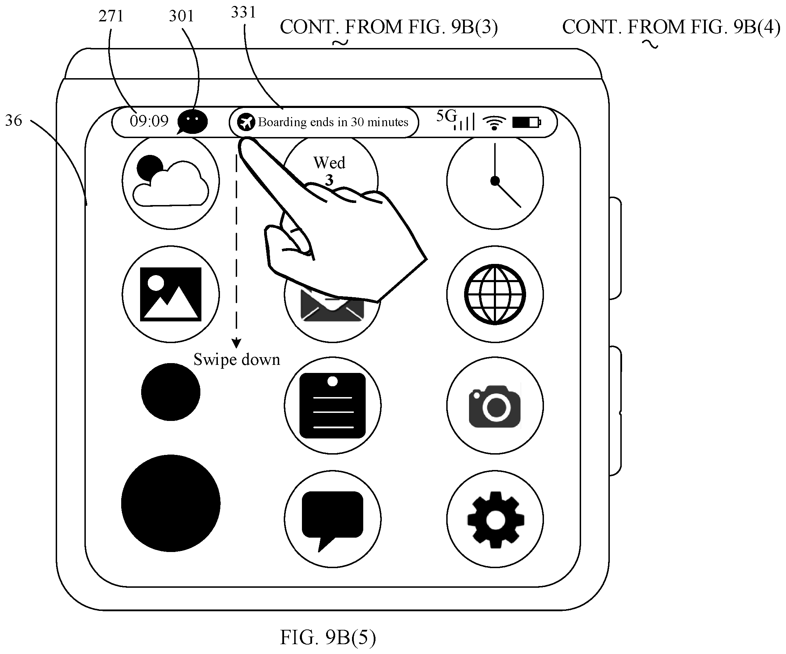

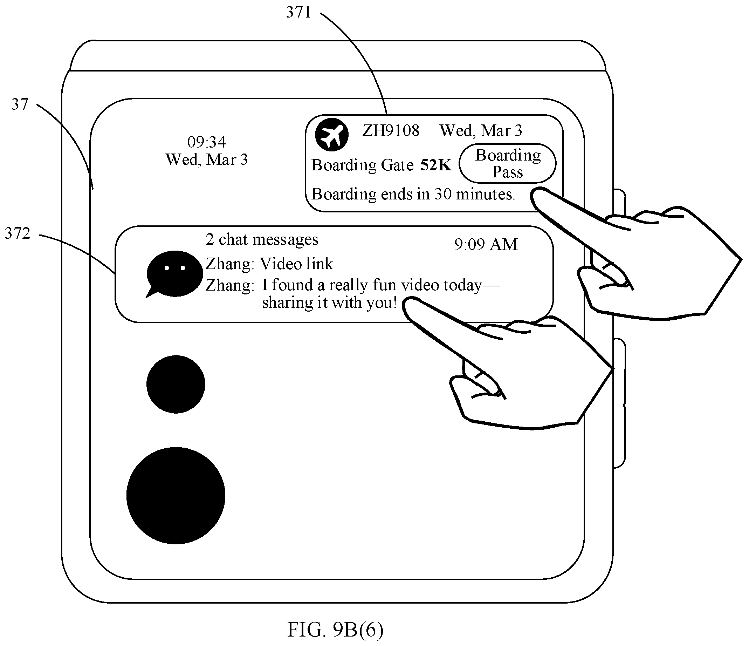

For example, for a user interface 32 shown in FIG. 9B(1), in the screen-locked state, the electronic device may display the notification 1 in the display region 111. In this case, the user may unlock the electronic device in a manner such as facial unlocking or fingerprint unlocking. Correspondingly, after the electronic device is unlocked, the notification 1 originally displayed in the display region 111 may be displayed in the status bar. Specifically, as shown in FIG. 9B(2), the electronic device may display the user interface 33 after being unlocked. The user interface 33 may include a status bar 271. The status bar 271 may include a display region 331. The display region 331 may be configured to display the notification 1. In a possible implementation, the display region 331 may be a capsule-shaped region. It may be understood that specific content of the notification 1 displayed in the display region 111 before the electronic device is unlocked may include "52K" and "Boarding", indicating that the boarding gate is 52K and prompting that boarding has begun. Specific content of the notification 1 displayed in the display region 331 after the electronic device is unlocked may include "Boarding ends in 30 minutes". To be specific, the specific content of the notification 1 displayed in the display region 111 before the electronic device is unlocked may be different from the specific content of the notification 1 displayed in the display region 331 after the electronic device is unlocked.

In some embodiments of this application, when the electronic device displays the important notification at a specific position of the status bar, the electronic device may generate a banner notification, and display the banner notification in the notification display region. According to the foregoing descriptions, when the duration of displaying the banner notification reaches t2 or the user triggers stop of the display of the banner notification in the notification display region, the electronic device may stop displaying the banner notification in the notification display region, and display the application icon corresponding to the banner notification (to be specific, the application icon corresponding to the application that generates the banner notification) in the status bar.

For example, after being unlocked, the electronic device may display a user interface 33 shown in FIG. 9B(2). When displaying the user interface 33, the electronic device may generate the notification 3. In a possible implementation, after generating the notification 3, the electronic device may display a user interface 34 shown in FIG. 9B(3). The user interface 34 may include a display region 111. The notification 3 is displayed in the display region 111. In another possible implementation, after generating the notification 3, the electronic device may display a user interface 35 shown in FIG. 9B(4). The user interface 35 may include a display region 131. The notification 3 is displayed in the display region 131. It may be understood that the display region 111 included in the user interface 34 is the same as the display region 111 included in the user interface 28, and the display region 131 included in the user interface 35 is the same as the display region 131 included in the user interface 29.

For example, as shown in FIG. 9B(3), FIG. 9B(4), and FIG. 9B(5), after the duration of displaying the notification 3 in the display region 111 or the display region 131 reaches 5 seconds, the electronic device may display the user interface 36. The user interface 36 does not include the notification 3, and the status bar 271 in the user interface 36 may include the icon corresponding to the communication application that generates the notification 3, to be specific, the icon 301.

In some embodiments of this application, the user may view the banner notification and the important notification in the notification bar, and may further view application interfaces corresponding to the banner notification and the important notification.

For example, as shown in FIG. 9B(5), the electronic device may detect an operation of swiping down on the status bar 271. In response to the user operation, the electronic device may display the user interface 37 shown in FIG. 9B(6). The user interface 37 displays the notification bar of the electronic device. The user interface 37 may include a display region 371 and a display region 372. The display region 371 may be configured to display the notification 1, and the display region 372 may be configured to display the notification 3. Further, the electronic device may detect a user operation on the display region 372, and in response to the user operation, the electronic device may display a user interface 31. Similarly, the electronic device may detect a user operation on the display region 371, and in response to the user operation, the electronic device may display an application interface corresponding to the notification 1.

In some embodiments of this application, when the electronic device is in the unlocked state and generates an important notification, the electronic device may display the important notification in the notification display region in the form of a banner notification. In other words, after generating an important notification in the unlocked state, the electronic device may display the important notification in the notification display region. After duration of displaying the important notification in the notification display region reaches t2 or the user triggers stop of the display of the important notification in the notification display region, instead of displaying the important notification in the notification display region, the electronic device displays the important notification in the status bar.

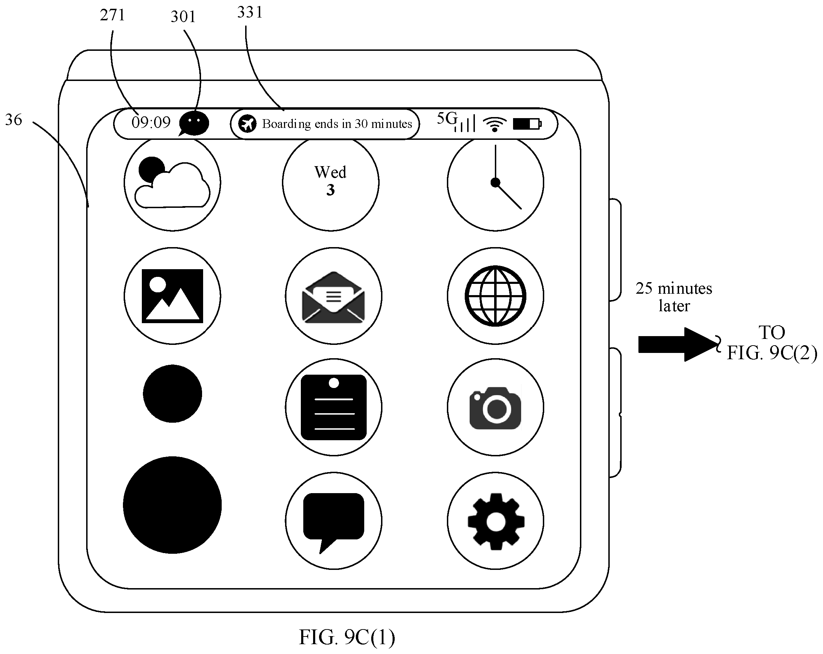

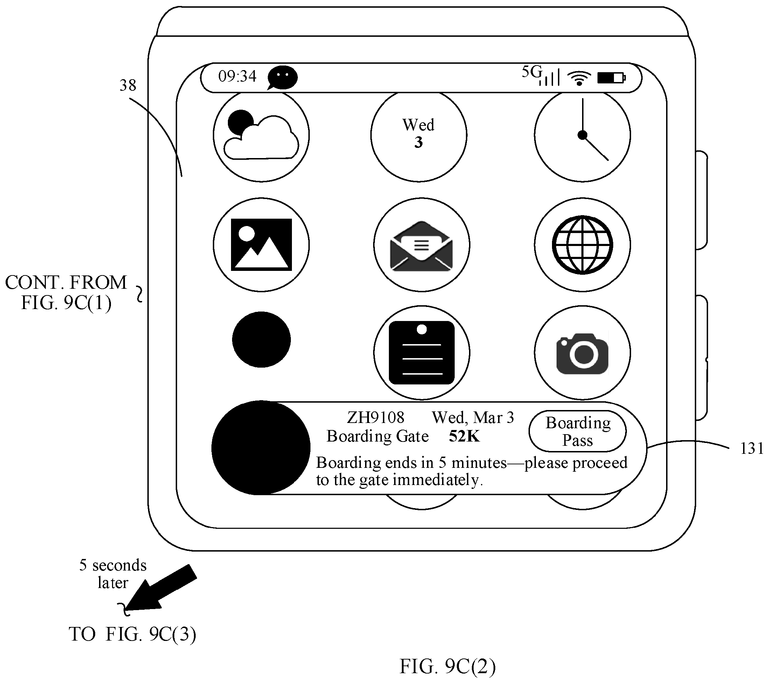

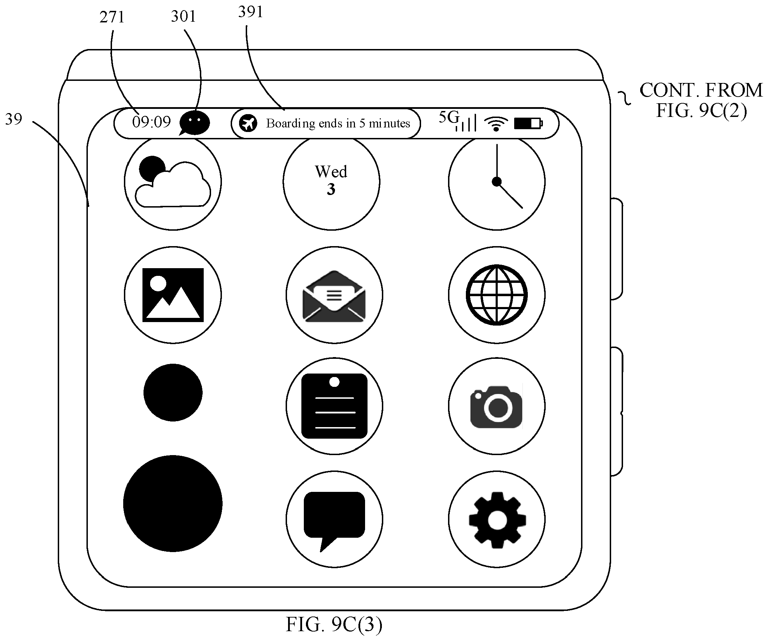

For example, the electronic device may display the user interface 36 shown in FIG. 9C(1). In this case, the notification 1 is displayed in the display region 331 in the status bar 271, and specific content of the notification 1 includes: "Boarding ends in 30 minutes". 25 minutes later, the electronic device may update the time at which boarding ends, and generate a new notification. For ease of description, this application records the new notification as a notification 4. The electronic device may display a user interface 38 shown in FIG. 9C(2). The user interface 38 may include a display region 131. The notification 4 is displayed in the display region 131 and is used for prompting the user that boarding ends in 5 minutes. It may be understood that after the duration of displaying the notification 4 in the display region 131 reaches 5 seconds, the electronic device may display the user interface 39 shown in FIG. 9C(3). Same as the user interface 36, the icon 301 is displayed in the status bar 271 included in the user interface 39. Different from the user interface 36, in the user interface 39, the status bar 271 includes a display region 391, and the display region 391 is configured to display the notification 4.

In some embodiments of this application, the layout of the status bar of the electronic device may be set based on a camera cutout region or a special-shaped border in the outer screen.

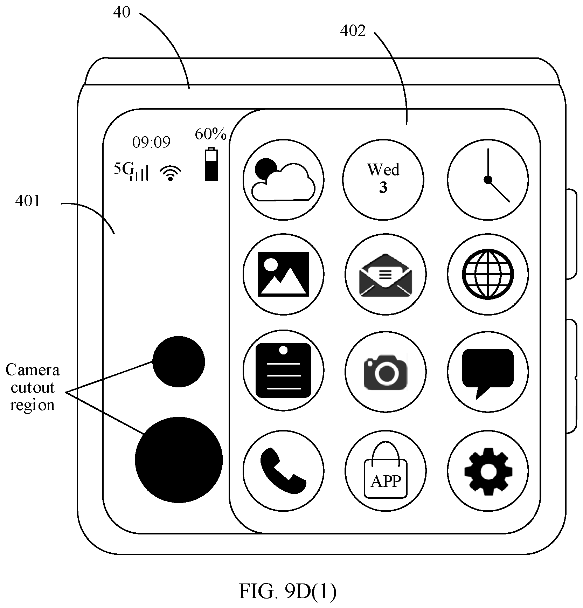

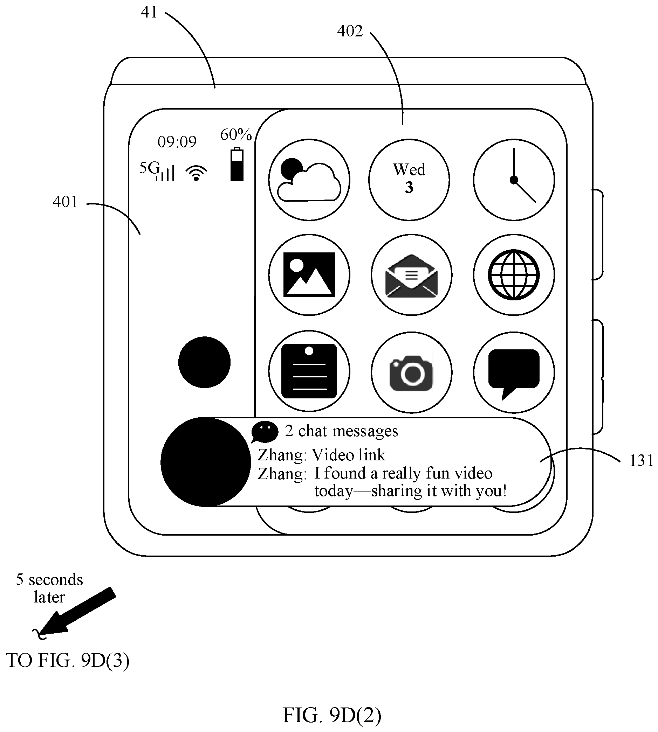

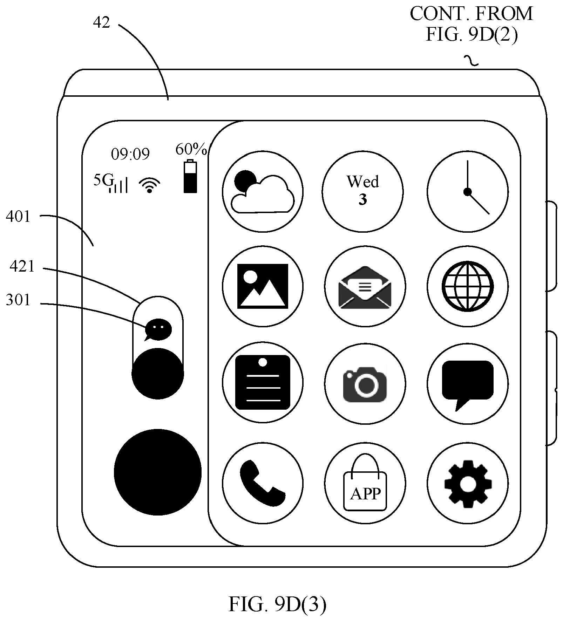

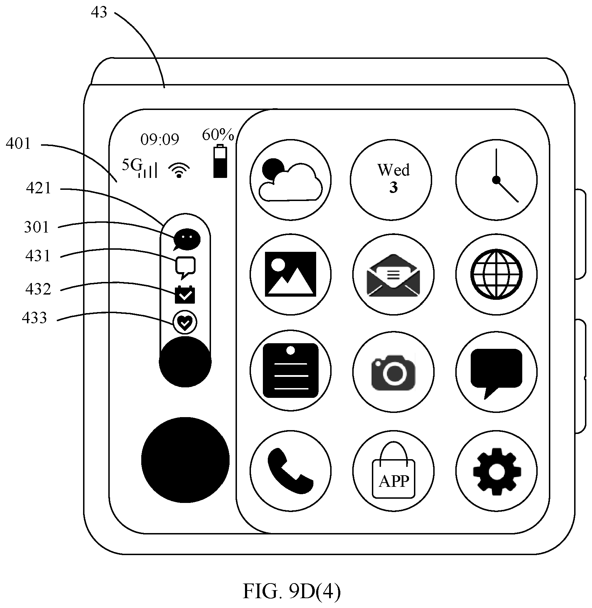

In a possible implementation, the status bar may include one or more camera cutout regions. For example, as shown in FIG. 9D(1), a status bar 401 may include cutout regions corresponding to two cameras.

In a possible implementation, the electronic device may set a specific display region in the status bar based on the camera cutout region and the special-shaped border in the outer screen to display the important notification and/or the application icon corresponding to the banner notification. For a specific setting rule of the specific display region, refer to the descriptions of the notification display region above, and details are not described herein again in this application. For example, when only an important notification or an application icon corresponding to a banner notification is to be displayed in the status bar, the specific display region may be a display region 421 (refer to related descriptions of z4) described below. When an important notification and an application icon corresponding to a banner notification are both to be displayed in the status bar, the specific display region may be a display region 461 to be described below. Similar to z3, the display region 461 is a band-shaped region that is connected to the camera cutout region 2 and that has two parallel sides (to be specific, two long sides that are parallel to each other) parallel to a left bezel and a right bezel of the outer screen.

For example, after being unlocked (refer to related descriptions of the user interface 26), the electronic device may display a user interface 40 shown in FIG. 9D(1). The user interface 40 may include a status bar 401 and a display region 402. Same as the status bar 271, the time, network signal, and battery level may be displayed in the status bar 401. Different from the status bar 271, while the status bar 271 is located at the top of the outer screen, the status bar 401 is located in a left-side region of the outer screen, and the status bar 401 includes the camera cutout region. The display region 402 may include a plurality of application icons. Further, when the electronic device displays the user interface 40, the electronic device may generate a notification 3 and display a user interface 41 shown in FIG. 9D(2). The user interface 41 may include a status bar 401, a display region 402, and a display region 131. Content displayed in the display region 131 is located above the status bar 401 and the display region 402. Specifically, as shown in FIG. 9D(2), the notification 3 displayed in the display region 131 may be located above the status bar 401 and the display region 402. It may be understood that after the duration of displaying the notification 3 in the display region 131 reaches 5 seconds, the electronic device may display the application icon corresponding to the notification 3 in the status bar. Specifically, the electronic device may display the user interface 42 shown in FIG. 9C(3). The status bar 401 in the user interface 42 may include a display region 421. The display region 421 is a display region adapted to the camera cutout region. An application icon corresponding to the notification 3, that is, the icon 301, is displayed in the display region 421. It may be understood that the size of the display region 421 may vary with a quantity of application icons that need to be displayed in the display region 421. To be specific, when more application icons need to be displayed in the display region 421, the display region 421 is larger. As shown in FIG. 9D(4), after the electronic device generates several banner notifications and the several banner notifications have all been displayed for 5 seconds, the electronic device may display a user interface 43. Compared with the display region 421 in the user interface 42, the display region 421 in the user interface 43 includes more icons (the icon 301, an icon 431, an icon 432, and an icon 433), and the display region 421 in the user interface 43 is also larger.

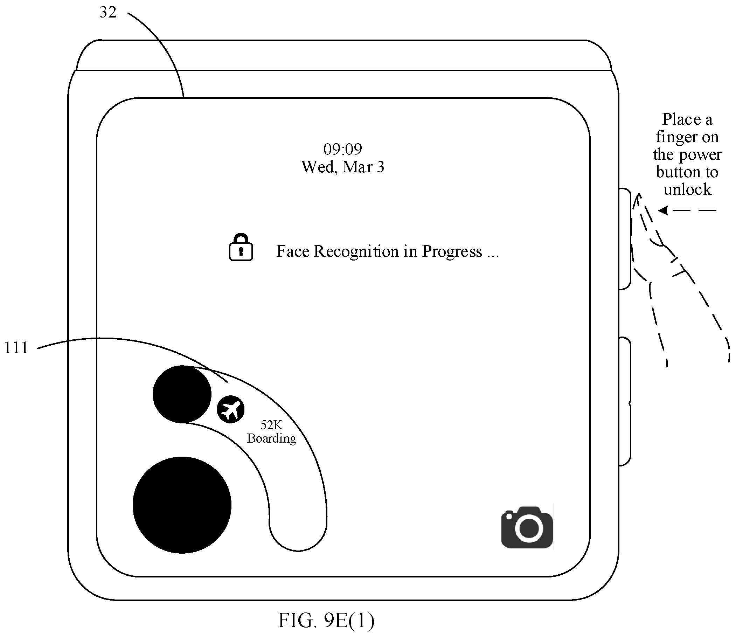

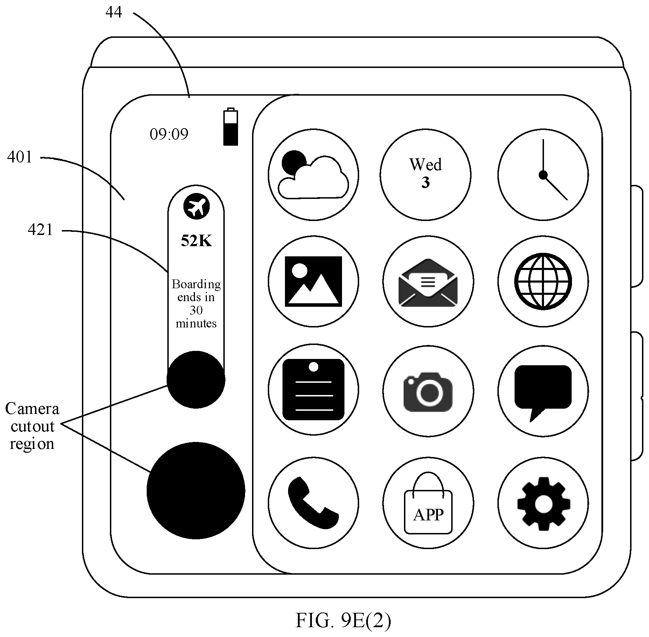

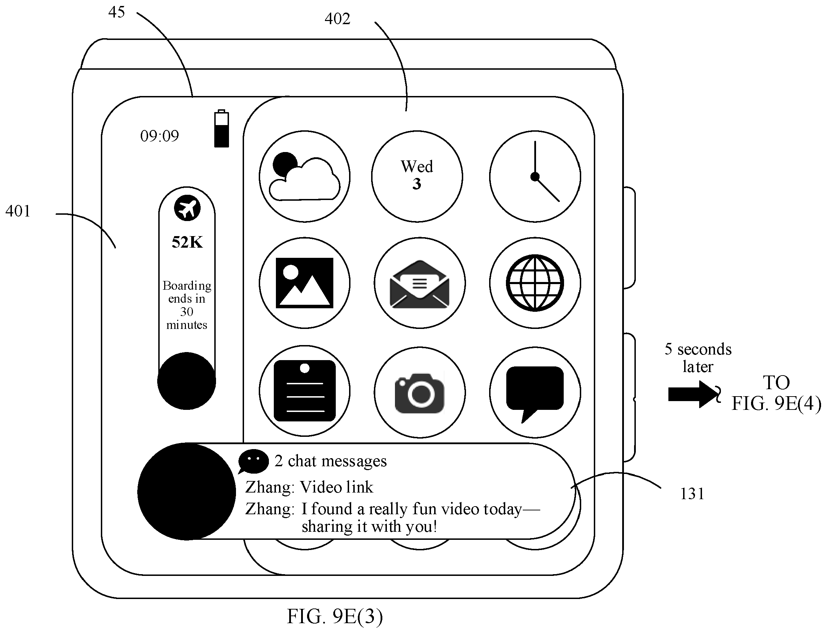

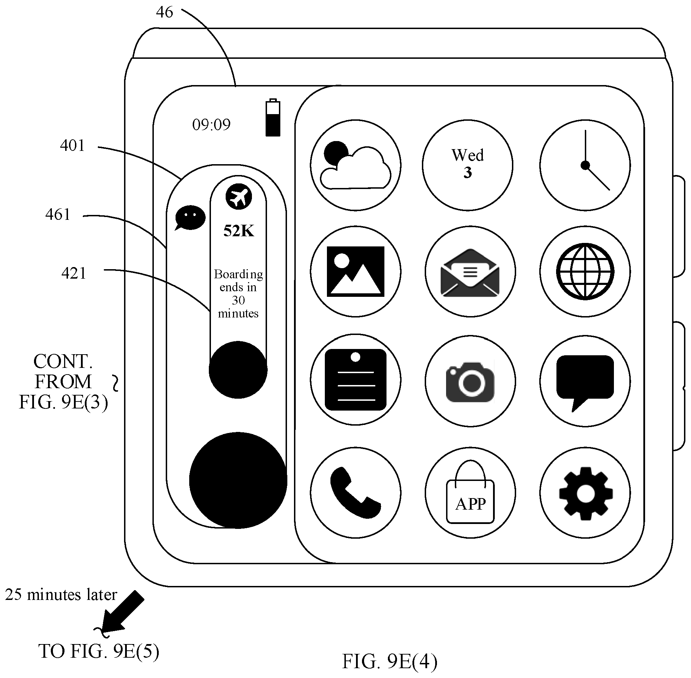

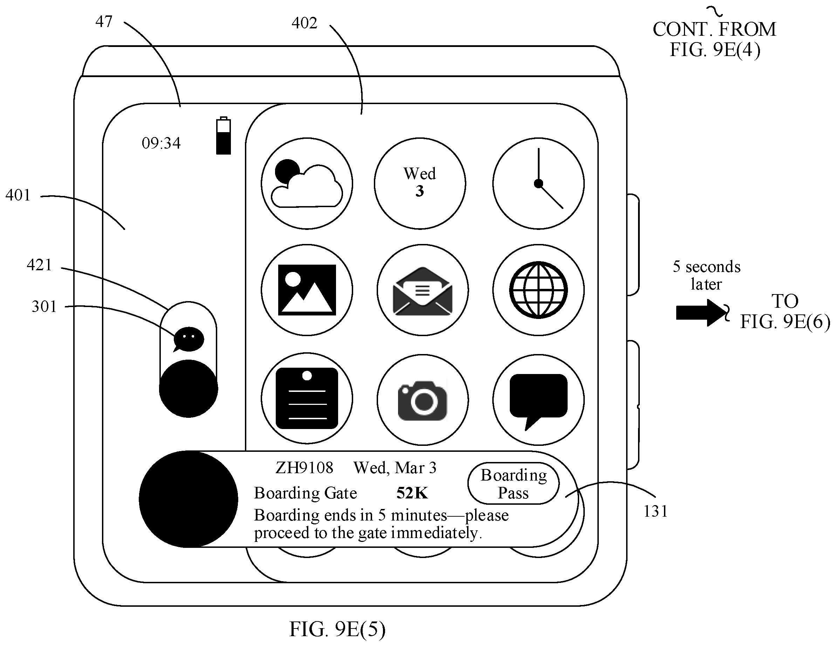

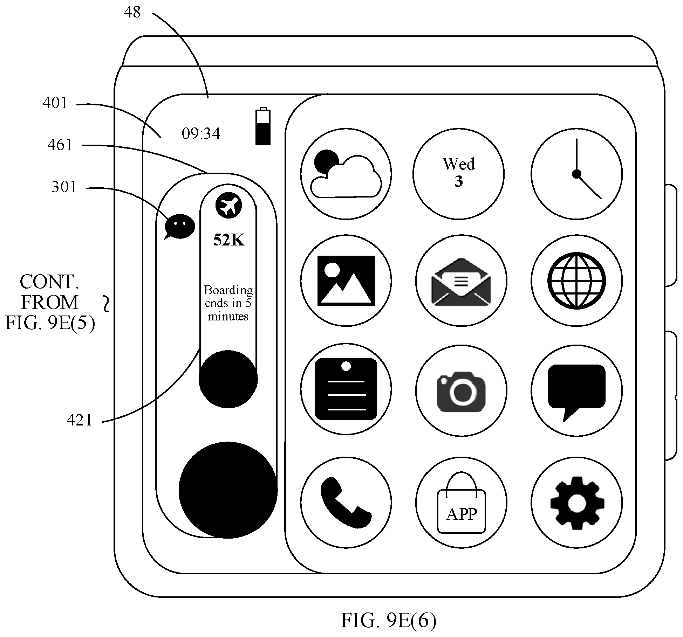

For example, for a user interface 32 shown in FIG. 9E(1), in the screen-locked state, the electronic device may display the notification 1 in the display region 111. In this case, the user may unlock the electronic device in a manner such as facial unlocking or fingerprint unlocking. Correspondingly, after the electronic device is unlocked, the notification 1 originally displayed in the display region 111 may be displayed in the status bar. Specifically, as shown in FIG. 9E(2), the electronic device may display the user interface 44 after being unlocked. The user interface 44 may include a status bar 401. The notification 1 may be displayed in the display region 421 in the status bar 401. It may be understood that specific content of the notification 1 displayed in the display region 111 before the electronic device is unlocked may include "52K" and "Boarding", indicating that the boarding gate is 52K and prompting that boarding has begun. Specific content of the notification 1 displayed in the display region 421 after the electronic device is unlocked may include "52K" and "Boarding ends in 30 minutes", indicating that the boarding gate is 52K and boarding ends in 30 minutes. To be specific, the specific content of the notification 1 displayed in the display region 111 before the electronic device is unlocked may be different from the specific content of the notification 1 displayed in the display region 421 after the electronic device is unlocked. Further, when the electronic device displays the user interface 44, the electronic device may generate a notification 3. In a possible implementation, after generating the notification 3, the electronic device may display a user interface 45 shown in FIG. 9E(3). The user interface 45 may include a status bar 401, a display region 402, and a display region 131. Content displayed in the display region 131 is located above the status bar 401 and the display region 402. Specifically, as shown in FIG. 9E(3), the notification 3 displayed in the display region 131 may be located above the status bar 401 and the display region 402. As shown in FIG. 9B(3) and FIG. 9B(4), after the duration of displaying the notification 3 in the display region 131 reaches 5 seconds, the electronic device may display the user interface 46. The user interface 46 does not include the notification 3. However, the status bar 401 in the user interface 46 may include a display region 461. The display region 461 may include the icon 301 (to be specific, the icon corresponding to the communication application that generates the notification 3) and the display region 421. Same as the display regions 421 in the user interface 44 and the user interface 45, the notification 1 is displayed in the display region 421 in the user interface 46. It may be understood that when the electronic device displays the user interface 46, the electronic device may continue to generate a new important notification. When duration of displaying a banner notification corresponding to the new important notification reaches 5 seconds or after the user triggers stop of the display of the banner notification corresponding to the new important notification, the electronic device may display the new important notification in the display region 421.

In some embodiments of this application, as the remaining boarding time is continuously decreasing, the electronic device may continuously update the corresponding boarding reminder, which may also be understood as that the electronic device may continuously generate new boarding reminders. For example, after the electronic device has generated the notification 1 for 25 minutes, the electronic device may generate a notification 4, and display a user interface 47 shown in FIG. 9E(5). The user interface 47 may include a status bar 401, a display region 402, and a display region 131. It may be understood that because a task corresponding to the notification 1 has ended, instead of the notification 1, the icon 301 is displayed in the display region 421 of the user interface 47. Same as the user interface 45, content displayed in the display region 131 in the user interface 47 is located above the status bar 401 and the display region 402. After duration of displaying the user interface 47 by the electronic device reaches 5 seconds, the electronic device may display a user interface 48 shown in FIG. 9E(6). The status bar 401 in the user interface 48 may include a display region 461. The display region 461 may include the icon 301 and the display region 421. The notification 4 is displayed in the display region 421.

In some embodiments of this application, the user may trigger the electronic device to display the application interface corresponding to the notification on the display (for example, a display region other than the status bar on the display).

For example, as shown in FIG. 9F(1), the electronic device may detect a user operation of swiping left on the status bar 401 included in the user interface 48. In response to the user operation, the electronic device may display the user interface 49 shown in FIG. 9F(2). Same as the user interface 37, the user interface 49 may include a display region 371 and a display region 372. Different from the user interface 37, the display region 371 included in the user interface 49 displays the notification 4 instead of the notification 1. The electronic device may detect a user operation on the display region 372, and in response to the user operation, the electronic device may display a user interface 50 shown in FIG. 9F(3). The user interface 50 may include a status bar 401 and a display region 402. The status bar 401 may include a display region 421, and a notification 4 is displayed in the display region 421. An application interface (to be specific, a corresponding interface of the communication application) corresponding to the notification 3 is displayed in the display region 402. Compared with the user interface 31, content that is displayed in the display region 402 and that is of the application interface corresponding to the notification 3 remains unchanged, and only the display region is slightly smaller. Similarly, the electronic device may further detect a user operation on the display region 371, and in response to the user operation, the electronic device may display a user interface 51 shown in FIG. 9F(4). The user interface 51 may include a status bar 401 and a display region 402. An application interface corresponding to the notification 4 is displayed in the display region 402. Compared with the status bar 401 in the user interface 48, the notification 4 is not displayed in the status bar 401 in the user interface 51.

**The following describes a specific implementation of the foregoing embodiments.**

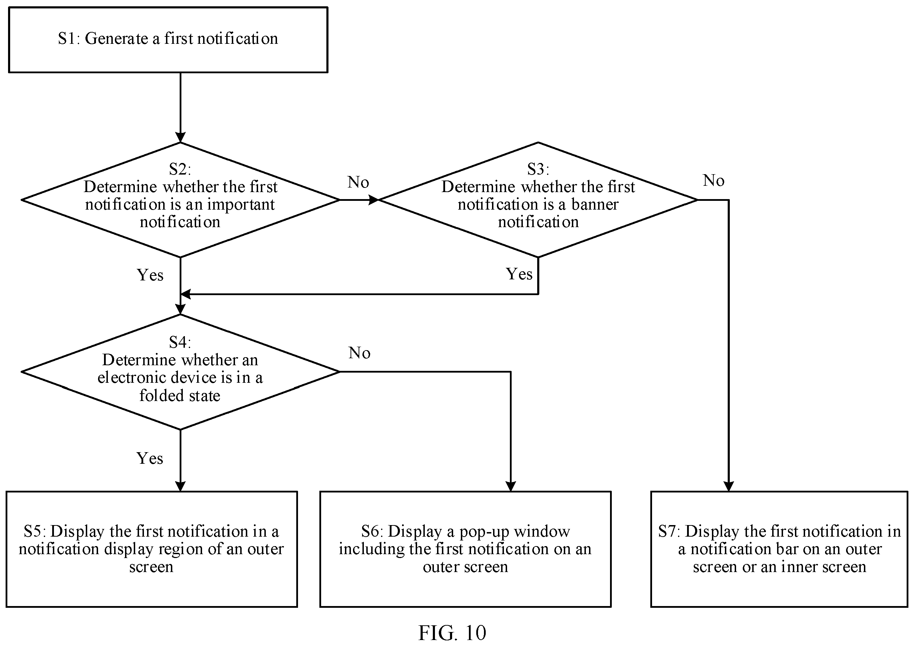

FIG. 10 is a flowchart of a display method according to an embodiment of this application. The display method may include, but is not limited to, the following steps:
S1: An electronic device generates a first notification.

The electronic device may generate the first notification. In some embodiments of this application, the electronic device may generate the first notification in a folded state.

In some embodiments of this application, the first notification may be any one of a notification 1, a notification 2, a notification 3, and a notification 4 described above.

In some embodiments of this application, the first notification may be a notification A or a notification B described below.

S2: The electronic device determines whether the first notification is an important notification.

After generating the first notification, the electronic device may determine whether the first notification is an important notification. If the first notification is an important notification, the electronic device may perform step S4, and if the first notification is not an important notification, the electronic device may perform step S3.

In some embodiments of this application, the electronic device may determine whether the first notification carries CapsuleData and/or whether the first notification carries dynamic card data. If the first notification carries CapsuleData and/or dynamic card data, the electronic device may determine that the first notification is an important notification. In some other embodiments of this application, the electronic device may determine whether the first notification carries an important notification tag. If the first notification carries an important notification tag, the electronic device may determine that the first notification is an important notification.

It may be understood that for specific meanings of CapsuleData, the dynamic card data, and the important notification tag, refer to the following related descriptions. Details are not described herein in this application.

S3: The electronic device determines whether the first notification is a banner notification.

If the first notification is not an important notification, the electronic device may determine whether the first notification is a banner notification. If the first notification is a banner notification, the electronic device may perform step S4, and if the first notification is not a banner notification, the electronic device may perform step S6.

S4: The electronic device determines whether the electronic device is in a folded state.

If the first notification is an important notification or the first notification is a banner notification, the electronic device may determine whether a physical state of the electronic device is the folded state. If the electronic device is in the folded state, the electronic device may perform step S5, to be specific, display the first notification in a notification display region of an outer screen. If the electronic device is not in the folded state, the electronic device may perform step S6, to be specific, display the first notification according to an original logic.

In some embodiments of this application, when the electronic device is in an intermediate state (for example, an opening angle of an inner screen is less than a specific angle), the electronic device may perform step S5.

S5: The electronic device displays the first notification in a notification display region of an outer screen.

If the first notification is an important notification and the electronic device is in the folded state, the electronic device may display the first notification in the notification display region of the outer screen. If the first notification is a banner notification and the electronic device is in the folded state, the electronic device may also display the first notification in the notification display region of the outer screen.

S6: The electronic device displays a pop-up window including the first notification on an outer screen.

If the first notification is an important notification/a banner notification, and the electronic device is not in the folded state, the electronic device may display the pop-up window including the first notification on the outer screen. To be specific, in this case, instead of displaying the first notification in the notification display region of the outer screen, the electronic device may additionally generate a pop-up window to display the first notification.

In some embodiments of this application, when the first notification is an important notification/a banner notification and the electronic device is not in the folded state, the electronic device may not necessarily display the first notification in the form of a pop-up window, but may alternatively display the first notification in another form. This is not limited in this application.

S7: The electronic device displays the first notification in a notification bar on an outer screen or an inner screen.

If the first notification is neither an important notification nor a banner notification, the electronic device may display the first notification in the notification bar. Specifically, if the first notification is neither an important notification nor a banner notification and the electronic device is in the folded state, the electronic device may display the first notification in the notification bar on the outer screen. If the first notification is neither an important notification nor a banner notification and the electronic device is in an unfolded state, the electronic device may display the first notification in the notification bar on the inner screen.

In some embodiments of this application, when the opening angle of the inner screen is less than a specific angle (for example, 90 degrees), the electronic device may display the first notification in the notification bar on the outer screen. When the opening angle of the inner screen is not less than a specific angle (for example, 90 degrees), the electronic device may display the first notification in the notification bar of the inner screen.

It should be noted that this application does not limit a sequence in which the electronic device performs step S2, step S3, and step S4. In some embodiments of this application, the electronic device may simultaneously perform step S2, step S3, and step S4. In this case, f the first notification is an important notification/a banner notification and the electronic device is in the folded state, the electronic device may display the first notification in the notification display region of the outer screen. In some embodiments of this application, the electronic device may first perform step S4, and then perform step S2 and step S3 when the electronic device is in the folded state.

**A software structure of an electronic device in embodiments of this application is described below.**

The operating system of the electronic device may use a layered architecture, an event-driven architecture, a microkernel architecture, a micro service architecture, or a cloud architecture. In embodiments of this application, an Android (Android) operating system of a layered architecture is used as an example to describe the software structure of the electronic device. It should be noted that, although this embodiment of this application is described by using the Android operating system (which may be referred to as an Android system for short) as an example, a basic principle in this embodiment is also applicable to an electronic device based on an operating system such as iOS or Windows.

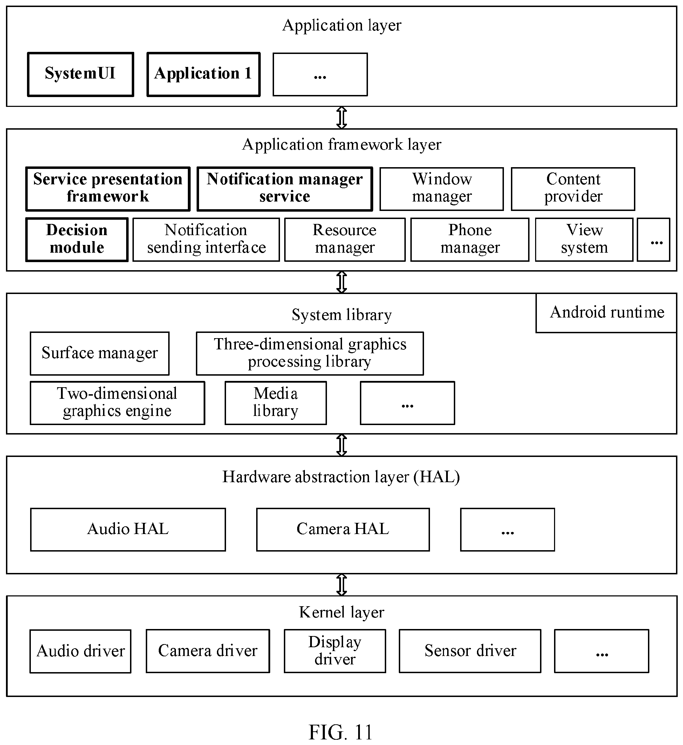

FIG. 11 is a diagram of a software structure of an electronic device according to an embodiment of this application.

A layered architecture is used for the software structure of the electronic device, to be specific, software is divided into several layers, and each layer has a clear role and task. The layers communicate with each other through a software interface. For example, an Android system runs on an AP. In some embodiments of this application, a software structure of the Android system is divided into five layers: an application layer, an application framework (Framework) layer, an Android runtime (Android runtime) and a system library, a hardware abstraction layer (HAL), and a system kernel layer (Kernel) from top to bottom.

The application layer may include a series of application packages. The application packages may include an application 1 and other applications. It may be understood that the application 1 may be a system application (for example, Camera, Gallery, Calendar, Phone, Maps, WLAN, Bluetooth, Music, Video, and Messaging), or may be a three-party application. The application layer may further include a systemUI (System User Interface, SystemUI). The SystemUI may be configured to display an interface of the electronic device, for example, display a lock screen interface and display a signal icon corresponding to a SIM card (to be specific, the icon corresponding to the network signal described above).

The application framework layer provides an application programming interface (Application Programming Interface, API) and a programming framework for applications at the application layer. The application framework layer may include some predefined functions. For example, the application framework layer may include a window manager, a content provider, a view system, a phone manager, a resource manager, and the like. The phone manager is configured to provide a call function of the electronic device, for example, management of a call status (including answering, declining, or the like).

In some embodiments of this application, the application framework layer may further include a decision module, a service presentation framework, a notification manager service, and a notification sending interface. The decision module may receive user status information transmitted by an application, select, from the user status information, status information requiring reminders, and generate a corresponding notification. The service presentation framework may be understood as an interface set, and is configured to send, to SystemUI, the notification generated by the decision module through decision making. The notification manager service (Notification Manager Service, NMS) may be configured to receive and distribute notifications. The notification sending interface may be configured to send, to the NMS, a notification generated by an application. In some embodiments of this application, the notification sending interface may be an interface in a notification manager (Notification Manager).

The runtime (Runtime) is responsible for scheduling and management of the system. Runtime includes a kernel library and a virtual machine. The kernel library includes two parts: a performance function that a programming language (for example, java language) needs to invoke, and a kernel library of the system. The application layer and the application framework layer run in the virtual machine. The virtual machine executes programming files (for example, java files) of the application layer and the application framework layer as binary files. The virtual machine is configured to perform functions such as object lifecycle management, stack management, thread management, security and exception management, and garbage collection.

The system library may include a plurality of functional modules, for example, a surface manager (Surface Manager), a media library (Media Libraries), a three-dimensional graphics processing library (for example, OpenGL ES), and a two-dimensional graphics engine (for example, SGL). For specific meanings and functions of these functional modules, refer to related technical documents. Details are not described herein again.

The hardware abstraction layer (HAL) is an interface layer located between an operating system kernel and upper layer software, and aims to abstract hardware. The hardware abstraction layer is an abstraction interface of a device kernel driver, and is configured to provide a higher-level Java API framework with an application programming interface for accessing an underlying device. The HAL may provide a standard interface to display a device hardware function to the higher-level Java API framework. The HAL includes a plurality of library modules (for example, a camera HAL and an audio HAL). When a system frame layer API requires access to hardware of a portable device, an operating system loads the library modules for components of the hardware.

The kernel layer is the basis of the Android system. The kernel layer is responsible for functions such as a hardware driver, a network, a power supply, system security, and memory management. The kernel layer is an intermediate layer between hardware and software, and its function is to transfer a request of an application to the hardware. The kernel layer may include an audio driver, a display driver, a camera driver, and a sensor driver.

It should be noted that the diagram of the software structure of the electronic device shown in FIG. 11 provided in this application is only an example, and does not limit specific module division in different layers of the Android system. For details, refer to the descriptions of the software structure of the Android system in conventional technologies. In addition, the method provided in this application may alternatively be implemented based on another operating system. Examples are not provided one by one in this application.

**The following describes a specific implementation of the foregoing embodiments based on the software structure shown in** **FIG. 11****.**

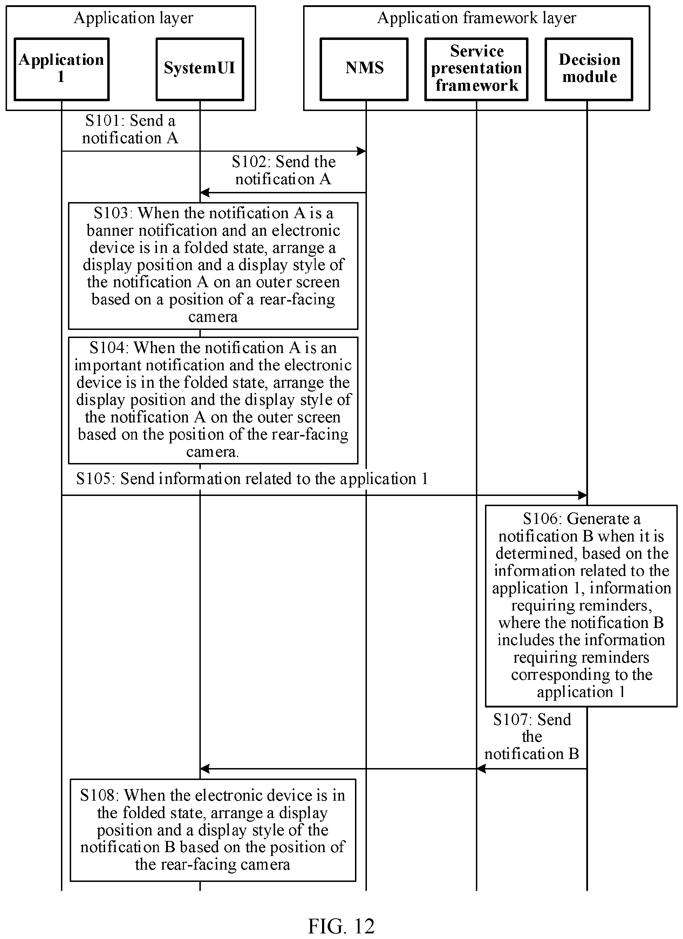

FIG. 12 is a flowchart of a display method according to an embodiment of this application. The display method may include, but is not limited to, the following steps:
S101: The application 1 sends a notification A to the NMS.

The application 1 may send the notification A to the NMS. In some embodiments of this application, the application 1 may invoke the notification sending interface of the framework layer to send the notification A to the NMS.

In some embodiments of this application, when the notification A is an important notification, the notification A may carry CapsuleData (CapsuleData). In a possible implementation, CapsuleData is content such as an icon, a title, and text displayed in a current capsule that is filled based on a control template (which may be understood as a user-defined view), and may be understood as specific content of the notification A (for example, an icon and text corresponding to the notification A). In another possible implementation, CapsuleData is content such as an icon, a title, or text filled based on a user-defined control of the application.

In some other embodiments of this application, when the notification A is an important notification, the notification A may carry dynamic card data. Similar to CapsuleData, the dynamic card data may be content such as an icon, a title, and text that is filled based on a control template or a user-defined control of the application. Different from CapsuleData, the dynamic card data may include more content than CapsuleData.

In some embodiments of this application, CapsuleData and the dynamic card data are bound. To be specific, if the notification A carries CapsuleData, the notification A also carries the dynamic card data. If the notification A carries the dynamic card data, the notification A also carries CapsuleData.

Correspondingly, the NMS may receive the notification A sent by the application 1.

It may be understood that another application or software module may alternatively send the notification A to the NMS. This is not limited in this application.

S102: The NMS sends the notification A to SystemUI.

It may be understood that SystemUI may register NotificationListenerService (NotificationListenerService) with the NMS. In some embodiments of this application, after the electronic device is started, SystemUI in the electronic device may register NotificationListenerService with the NMS.

After receiving the notification A sent by the application 1, the NMS may send the notification A to SystemUI.

S103: When the notification A is a banner notification and the electronic device is in a folded state, SystemUI arranges a display position and a display style of the notification A on an outer screen based on a position of a rear-facing camera.

When the notification A is a banner notification and the electronic device is in a folded state, SystemUI may arrange the display position and the display style of the notification A on the outer screen based on the position of the rear-facing camera. Specifically, SystemUI may determine a position, a shape, and a size of a notification display region, and display the notification A in the notification display region.

It may be understood that the notification A may carry a type parameter. In this case, after receiving the notification A, SystemUI may determine, based on the type parameter carried in SystemUI, whether the notification A is a banner notification. If the notification A carries the type parameter indicating a banner notification, SystemUI may determine that the notification A is a banner notification. It may be understood that the type parameter may be digits, a character string, or the like. An expression form of the type parameter is not limited in this application.

It may be understood that the banner notification is a display form of a notification. The notification may be displayed in the form of a banner notification, may be displayed in a notification bar, or may be displayed on a lock screen. In some embodiments of this application, when the electronic device is in the unlocked state, the electronic device may display the banner notification.

In some embodiments of this application, the display position may include a position of a display region that is on the outer screen and that is used for displaying the notification A. The display style may include a shape and a size of the display region that is on the outer screen and that is used for displaying the notification A, and may further include a color, a font size, a font type, and the like of the display region.

In some embodiments of this application, after receiving the notification A, SystemUI may obtain a physical state of the electronic device through a corresponding interface (for example, a corresponding interface of the frame layer), to be specific, determine whether the electronic device is in an unfolded state, a folded state, or an intermediate state. If the electronic device is in the unfolded state, SystemUI may arrange the position, the shape, and the size of the display region for displaying the notification A on an inner screen. If the electronic device is in the folded state and the notification A is a banner notification, SystemUI may arrange the position, the shape, and the size of the display region (to be specific, the notification display region) for displaying the notification A on the outer screen. If the electronic device is in the intermediate state, SystemUI may temporarily not display the notification A.

In some embodiments of this application, when the electronic device is in the intermediate state and the opening angle of the inner screen is less than a specific angle (for example, 60 degrees), SystemUI may arrange the display position and the display style of the notification A on the outer screen based on the position of the rear-facing camera. It may be understood that the specific angle may be set according to an actual requirement. This is not limited in this application.

In some embodiments of this application, after receiving the notification A, SystemUI may determine, through a corresponding interface (for example, a corresponding interface of the frame layer), whether a screen currently running on the electronic device is the inner screen or the outer screen. If the screen currently running on the electronic device is the outer screen and the notification A is a banner notification, SystemUI may arrange the position, the shape, and the size of the display region (to be specific, the notification display region) for displaying the notification A on the outer screen. If the screen currently running on the electronic device is the inner screen, SystemUI may arrange the position, the shape, and the size of the display region for displaying the notification A on an inner screen.

In some embodiments of this application, when the notification A is a banner notification, the notification A may be displayed in a NotificationShade (NotificationShade) window. NotificationShade is a drop-down notification bar, and may be used for displaying a system notification and other related information.

S104: When the notification A is an important notification and the electronic device is in the folded state, SystemUI arranges the display position and the display style of the notification A on the outer screen based on the position of the rear-facing camera.

In some embodiments of this application, after receiving the notification A, SystemUI may determine whether the notification A carries CapsuleData and dynamic card data. If the notification A carries CapsuleData and/or dynamic card data, SystemUI may determine that the notification A is an important notification.

In some embodiments of this application, after receiving the notification A, SystemUI may determine whether the notification A carries an important notification tag. If the notification A carries an important notification tag, SystemUI may determine that the notification A is an important notification. It may be understood that the important notification tag may be a parameter value, a character string, or the like. An expression form of the important notification tag is not limited in this application.

It may be understood that for a specific implementation of determining the physical state of the electronic device, refer to step S104. Details are not described in this application again.

In some embodiments of this application, when the notification A carries an important notification tag and the electronic device is in the folded state, if the electronic device is in a screen-locked state, SystemUI may determine the notification display region on the outer screen based on the position of the rear-facing camera, and display the notification A in the notification display region. However, if the electronic device is in the unlocked state, SystemUI may first display the notification A in the form of a banner notification. Specifically, SystemUI may determine the notification display region on the outer screen based on the position of the rear-facing camera, and display the notification A in the notification display region. After duration of displaying the notification A reaches t2, the electronic device may display the notification A in another form (for example, as shown in FIG. 9E(1) to FIG. 9E(6), display the notification A in a display region 421 included in a status bar).

It may be understood that the lock screen is not in an independent window (window), and may be understood as NotificationShade.

S105: The application 1 sends information related to the application 1 to the decision module.

The application 1 may collect, based on use habits and a scenario of a user, information related to the application 1, for example, ride-hailing service status information, flight status information, high-speed rail/train status information, and exercise status information. After collecting the related information, the application 1 may send the related information to the decision module. Correspondingly, the decision module may receive the related information sent by the application 1.

It may be understood that the ride-hailing service status information may include any one or more of the following: a license plate number, identity information of a driver, a phone number of the driver, whether a vehicle reaches a starting point, the distance between the vehicle and the starting point, the distance between the vehicle and a destination, and the like. Similarly, the flight status information may include any one or more of the following: a flight number, a departure time and an arrival time, a departure place and a destination, a check-in counter and a check-in time, a boarding gate and a boarding time, baggage carousel information, and the like. Similarly, the train/high-speed rail status information may include any one or more of the following: a train number, a seat number, a departure time and an arrival time, a departure place and a destination, a ticket checking time, and the like. The exercise status information may include any one or more of the following: exercise duration, an exercise type (for example, rope skipping, running, or yoga), an exercise status (for example, exercising, ready to start exercising, or exercising completed), and the like.

S106: The decision module generates a notification B when it is determined, based on the information related to the application 1, information requiring reminders. The notification B includes the information requiring reminders corresponding to the application 1.

After receiving the information related to the application 1 sent by the application 1, the decision module may select information requiring reminders from the information related to the application 1. When the decision module determines, based on the information related to the application 1, that information requiring reminders exists, the decision module may generate the notification B based on the information requiring reminders.

In some embodiments of this application, the important notification includes a notification generated by the decision module. In a possible implementation, the notification generated by the decision module may carry CapsuleData and/or dynamic card data. In this case, the notification B may carry the CapsuleData and/or the dynamic card data.

In some embodiments of this application, the information related to the application 1 currently received by the decision module is different from the information related to the application 1 received previously. In this case, the decision module may determine that information requiring reminders exists in the currently received information related to the application 1, and the information requiring reminders may be the changed information related to the application 1.

For example, the exercise status included in the information related to the application 1 that is previously received by the decision module is "ready to start exercising", and the exercise status included in the currently received information related to the application 1 is "exercising", the decision module may determine that information requiring reminders exists in the currently received information related to the application 1, to be specific, the exercise status changes to "exercising". Further, the decision module may generate a corresponding notification, to be specific, the notification B, based on the changed exercise status.

For example, the information related to the application 1 received by the decision module may be flight status information. Specifically, as shown in FIG. 9C(1), the boarding time included in the flight status information previously received by the decision module may be 30 minutes. As shown in FIG. 9C(2), the boarding time included in the flight status information currently received by the decision module may be 5 minutes. In this case, the decision module may determine that information requiring reminders exists in the currently received information related to the application 1, to be specific, the boarding time is changed to 5 minutes. Further, the decision module may generate a corresponding notification, to be specific, the notification B, based on the changed boarding time.

S107: The decision module sends the notification B to SystemUI using the service presentation framework.

After generating the notification B, the decision module may send the notification B to SystemUI using the service presentation framework.

In some embodiments of this application, SystemUI may register notifications with the service presentation framework. In this way, after generating the notification, the decision module may send the corresponding notification using the service presentation framework. In a possible implementation, after the electronic device is started, SystemUI may register notifications with the service presentation framework.

In some embodiments of this application, the service presentation framework may be a software module integrating a plurality of interfaces.

Correspondingly, SystemUI may receive the notification B sent by the decision module.

S108: When the electronic device is in the folded state, SystemUI arranges a display position and a display style of the notification B based on the position of the rear-facing camera.

After receiving the notification B, SystemUI may determine whether the electronic device is in the folded state. When the electronic device is in the folded state, if the electronic device is in a screen-locked state, SystemUI may determine the notification display region on the outer screen based on the position of the rear-facing camera, and display the notification B in the notification display region. However, if the electronic device is in the unlocked state, SystemUI may first display the notification B in the form of a banner notification. Specifically, SystemUI may determine the notification display region on the outer screen based on the position of the rear-facing camera, and display the notification B in the notification display region. After duration of displaying the notification B reaches t2, the electronic device may display the notification B in another form (for example, as shown in FIG. 9E(1) to FIG. 9E(6), display the notification B in a display region 421 included in a status bar).

It may be understood that for specific descriptions of the display position and the display style, refer to the foregoing descriptions. This is not limited in this application.

It should be noted that an execution sequence of step S101 and step S105 is not limited in this application. Optionally, the electronic device may perform step S101 to step S104, but does not perform step S105 to step S108. Optionally, the electronic device may perform step S105 to step S108, but does not perform step S101 to step S104. Optionally, the electronic device may perform step S105 to step S108.

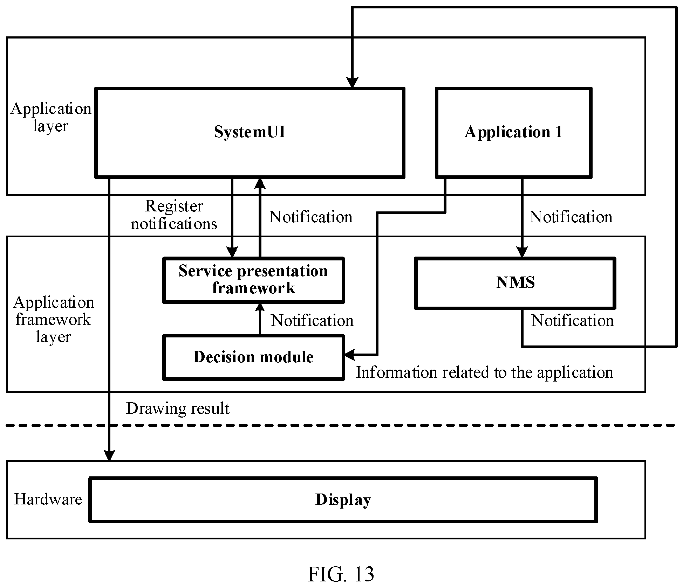

**The following describes a specific implementation of the foregoing embodiments based on the hardware structure shown in** **FIG. 3** **and the software structure shown in** **FIG. 11** **with reference to** **FIG. 13** **from the perspective of software and hardware interaction.**

It may be understood that after generating notifications, an application or another software module in the electronic device may send the notifications to the NMS in the electronic device. Further, after receiving the notifications generated by the application or another software module, the NMS may distribute the notifications. As shown in FIG. 13, after generating a notification, the application 1 may send the notification to the NMS. Further, after receiving the notification sent by the application 1, the NMS may send the notification to SystemUI. In addition, the application 1 may send the information related to the application 1 to the decision module. The decision module may generate a notification based on the information related to the application 1, and send the notification to SystemUI using the service presentation framework. It may be understood that after receiving the notification sent by the NMS or via the service presentation framework, SystemUI may perform layout and drawing based on the notification, and send a drawing result to a display of the electronic device, so that the display displays the notification.

It may be understood that the notification generated by the application 1 may be a notification carrying an important notification tag, to be specific, an important notification.

It may be understood that after the electronic device is started, SystemUI in the electronic device may register notifications with the service presentation framework, so that SystemUI may receive a notification sent via the service presentation framework.

The foregoing descriptions are merely specific implementations of the present invention, but are not intended to limit the scope of protection of the present invention. Any variation or replacement readily figured out by a person skilled in the art within the technical scope disclosed in the present invention shall fall within the scope of protection of the present invention. Therefore, the scope of protection of the present invention shall be subject to the scope of protection of the claims.

## Claims

1. A display method, applied to an electronic device comprising an outer screen, an inner screen, and an external camera, the external camera and the outer screen being on a same side of the electronic device, the external camera comprising one or more cameras, the method comprising:
generating a first notification when the electronic device is in a folded state; and
displaying the first notification in a first display region of the outer screen when the first notification meets a first preset condition, the first display region being a region extending from the external camera.

2. The method according to claim 1, wherein the external camera comprises a first camera, and the first display region and a region in which the first camera is located form an annular region.

3. The method according to claim 2, wherein the external camera further comprises a second camera, and the annular region surrounds the second camera.

4. The method according to claim 3, wherein a geometric center of the annular region is the same as a geometric center of a region in which the second camera is located.

5. The method according to claim 4, wherein an area of the region in which the first camera is located is smaller than an area of the region in which the second camera is located.

6. The method according to claim 1, wherein the external camera comprises a first camera and a second camera, and the first display region, a region in which the first camera is located, and a region in which the second camera is located form an annular region; and the first display region being a region extending from the external camera comprises: the first display region being a region extending from the first camera to the second camera.

7. The method according to claim 1, wherein the external camera comprises a first camera, and the first display region and a region in which the first camera is located form a band-shaped region.

8. The method according to claim 7, wherein the external camera further comprises a second camera, and an area of a region in which the second camera is located is smaller than an area of a region in which the first camera is located; and the first display region being a region extending from the external camera comprises: the first display region being a band-shaped region extending from the first camera.

9. The method according to any one of claims 1 to 8, wherein the first display region being a region extending from the external camera comprises: the first display region being a region extending from a cutout region corresponding to the external camera.

10. The method according to any one of claims 1 to 8, wherein the first display region being a region extending from the external camera comprises: the first display region being a region extending from a region in which the inner screen is coupled to the external camera; and a border of the region in which the inner screen is coupled to the external camera is concave.

11. The method according to any one of claims 1 to 10, wherein the method further comprises:
generating a second notification when the electronic device is in the folded state;
and
displaying the second notification in a notification bar on the outer screen if the second notification meets a second preset condition, wherein
that the second notification meets a second preset condition comprises: the second notification being any one of a calendar notification, a schedule notification, an application store notification, a game notification, and an SMS message notification.

12. The method according to any one of claims 1 to 10, wherein that the first notification meets a first preset condition comprises: the first notification being any one of a call status notification, a travel status notification, an exercise status notification, a recording status notification, a check-in status notification, and a code scanning status notification.

13. The method according to any one of claims 1 to 10, wherein that the first notification meets a first preset condition comprises: the first notification being a banner notification.

14. The method according to claim 12 or 13, wherein the displaying the first notification in a first display region of the outer screen comprises: displaying the first notification in the first display region of the outer screen when the electronic device is in an unlocked state.

15. The method according to claim 14, wherein the first notification is generated by a first application, and after the displaying the first notification in a first display region of the outer screen, the method further comprises:
detecting a first operation performed by a user on the first display region; and
displaying a first interface of the first application on the outer screen in response to the first operation.

16. The method according to claim 14 or 15, wherein duration of displaying the first notification in the first display region is not greater than first duration; and
after the displaying the first notification in a first display region of the outer screen, the method further comprises:
displaying the first notification in a status bar on the outer screen when the duration of displaying the first notification in the first display region is greater than the first duration.

17. The method according to claim 12, wherein the displaying the first notification in a first display region of the outer screen comprises: displaying the first notification in the first display region of the outer screen when the electronic device is in a screen-locked state.

18. The method according to claim 17, wherein after the generating a first notification when the electronic device is in a folded state, the method further comprises:
generating a third notification when the electronic device is in the folded state and in the screen-locked state;
displaying the third notification in the first display region of the outer screen when the third notification meets the first preset condition;
detecting a second operation performed by a user on the first display region; and
displaying the first notification in the first display region of the outer screen in response to the second operation.

19. An electronic device, wherein the electronic device comprises an outer screen, an inner screen, an external camera, one or more memories, and one or more processors, the outer screen is coupled to the external camera, the one or more memories, and the one or more processors, the inner screen is coupled to the one or more memories and the one or more processors, the outer screen and the inner screen are configured to display pictures, the external camera is configured to capture an image, the memory is configured to store computer program code, the computer program code comprises computer instructions, and the processor invokes the computer instructions to perform the method according to any one of claims 1 to 18.

20. A computer-readable storage medium, configured to store computer instructions, the computer instructions, when being run on an electronic device, cause the electronic device to perform the method according to any one of claims 1 to 18.
